# EUROPEAN PATENT APPLICATION

(11) **EP 4 030 153 A1**
(43) Date of publication of application: **20.07.2022**
(21) Application number: 20862590.5
(22) Date of filing: 07.09.2020
(51) Int. Cl.: G01J 1/42, F21V 19/00, B60Q 1/14, B60Q 1/24, F21V 23/00, F21Y 101/00, F21Y 105/00, F21Y 115/10, F21Y 115/30, F21V 14/04, F21S 41/13, F21S 41/675, F21W 102/14

(54) **VEHICULAR LAMP SYSTEM AND VEHICULAR LAMP**

(30) Priority: 11.09.2019 JP 2019165512; 11.09.2019 JP 2019165513
(71) Applicant: KOITO MANUFACTURING CO., LTD., Minato-ku, Tokyo 108-8711 (JP)
(72) Inventor: MOCHIZUKI Mitsuyuki, Shizuoka-shi, Shizuoka 424-8764 (JP)
(74) Representative: Hoffmann Eitle
(86) International application number: PCT/JP2020/033804
(87) International publication number: WO 2021/049462

(57) **Abstract**

This vehicular lamp (4) has a first light source (31), a second light source (32), and an optical sensor (34) for detecting light from the second light source (32). A control unit (101) has: a region setting unit (103) that compares information estimated from the outputs of a vehicle-mounted camera (6) and the optical sensor (34), and sets at least one among a light reducing region and an emphasizing region; and a lamp control unit (102) for controlling the lighting state of at least one among the first light source (31) and the second light source (32) on the basis of the output from the region setting unit (103).

## Description

### TECHNICAL FIELD

The present invention relates to a vehicle lamp system and a vehicle lamp used in a vehicle such as an automobile.

### BACKGROUND ART

According to Patent Literature 1 and the like, a vehicle lamp is known which performs a method (ADB control) of controlling light distribution of a headlamp of an own vehicle such that illumination is cut only for a portion of the vehicle when another vehicle is present in front of the own vehicle.

### CITATION LIST

### PATENT LITERATURE

Patent Literature 1: JP2013-079044A

### SUMMARY OF INVENTION

### TECHNICAL PROBLEM

In recent years, a plurality of types of sensors having different sensing methods have been mounted on a vehicle. Further, it is required to mount such a sensor on the vehicle lamp.

An object of the present invention is to provide a vehicle lamp system in which detection accuracy of an in-vehicle camera and a lamp-mounted optical sensor is further improved.

### SOLUTION TO PROBLEM

A vehicle lamp system according to an aspect of the present invention is a vehicle lamp system that includes a vehicle lamp and a control unit and that is mounted on a vehicle including an in-vehicle camera,
in which the vehicle lamp includes
   a first light source configured to emit visible light for capturing an image by an in-vehicle camera,
   a second light source,
   a scanning unit configured to scan light emitted from the first light source and light emitted from the second light source toward a front side of the lamp and to cause the front side of the lamp to be irradiated with the lights, and
   an optical sensor having high sensitivity to a wavelength of the light emitted by the second light source,
in which the control unit includes
   a region setting unit configured to set at least one of a dimming region and an emphasis region by comparing information estimated from an image output by the in-vehicle camera with information estimated from an output of the optical sensor, and
   a lamp control unit configured to control a turned-on state of at least one of the first light source and the second light source based on an output of the region setting unit.

A vehicle lamp according to an aspect of the present invention includes:
a first light source configured to emit light for a driver or an in-vehicle camera to perform visual recognition;
a second light source configured to emit light having a wavelength different from that of the first light source;
a scanning unit configured to scan light emitted from the first light source and light emitted from the second light source and emit the lights toward a front side of the lamp;
an optical sensor configured to output a signal corresponding to a reflection intensity of light emitted from the second light source; and
a control unit configured to control a turned-on state of the first light source based on an output of the optical sensor so as not to give glare to an oncoming vehicle,
in which the scanning unit scans light emitted from the second light source such that the light emitted from the second light source irradiates a linear region that extends in a horizontal direction, and
in which the scanning unit includes a reflector in which a portion that reflects light of the first light source toward a front side of the lamp and a portion that reflects light of the second light source toward the front side of the lamp are the same, or a reflector in which a portion that reflects the light of the first light source toward the front side of the lamp and a portion that reflects the light of the second light source toward the front side of the lamp are integrated.

### ADVANTAGEOUS EFFECTS OF INVENTION

According to the present invention, there is provided a vehicle lamp system in which detection accuracy of an in-vehicle camera and a lamp-mounted optical sensor is further improved.

### BRIEF DESCRIPTION OF DRAWINGS

FIG. 1 is a block diagram of a vehicle system in which a vehicle lamp system according to an embodiment of the present invention is incorporated.
FIG. 2 is a cross-sectional view of a vehicle lamp to be incorporated in the vehicle lamp system according to the embodiment of the present invention.
FIG. 3 is a schematic view showing an internal configuration of a lamp unit.
FIG. 4 is a system block diagram of a vehicle lamp.
FIG. 5 is a schematic diagram showing an irradiation range of each light emitted from the vehicle lamp of the present embodiment.
FIG. 6 is a time chart showing turn-on timings of first light sources and second light sources and an exposure timing of an optical sensor.
FIG. 7 shows a light distribution pattern obtained by a control unit controlling the first light sources.
FIG. 8A shows an image acquired by an in-vehicle camera at time s1.
FIG. 8B is a schematic diagram in which another vehicle is estimated based on an output of the optical sensor at the time s1.
FIG. 9A shows an image acquired by the in-vehicle camera at time s2.
FIG. 9B is a schematic diagram in which the other vehicle is estimated based on an output of the optical sensor at the time s2.
FIG. 10A shows an image acquired by the in-vehicle camera at time s3.
FIG. 10B is a schematic diagram in which the other vehicle is estimated based on an output of the optical sensor at the time s3.
FIG. 11A shows an image acquired by the in-vehicle camera at time s4.
FIG. 11B is a schematic diagram in which the other vehicle is estimated based on an output of the optical sensor at the time s4.
FIG. 12 is a block diagram of a vehicle system in which a vehicle lamp according to an embodiment of the present invention is incorporated.
FIG. 13 is a schematic view showing an internal configuration of a lamp unit.
FIG. 14 is a system block diagram of the vehicle lamp.
FIG. 15 is a schematic diagram showing an irradiation range of each light emitted from the vehicle lamp of the present embodiment.
FIG. 16 is a time chart showing turn-on timings of the first light sources and the second light sources and an exposure timing of the optical sensor.
FIG. 17 shows a light distribution pattern obtained by a control unit controlling the first light sources.
FIG. 18 is a diagram illustrating light irradiation when a position of a reflection point of the first light sources and a position of a reflection point of the second light sources are separated from each other.
FIG. 19 is a diagram showing an example of the first light sources and the second light sources provided on a substrate.
FIG. 20 is a schematic view showing an internal structure of a lamp unit according to a first modification.
FIG. 21 is a schematic diagram showing an internal structure of a lamp unit according to a second modification.
FIG. 22 is a schematic diagram showing an internal structure of a lamp unit according to a third modification.
FIG. 23 is a schematic diagram showing an internal structure of a lamp unit according to a fourth modification.
FIG. 24A is a front view showing a rotating reflector provided inside a lamp unit according to a fifth modification.
FIG. 24B is a side view showing the rotating reflector provided inside the lamp unit according to the fifth modification.

### DESCRIPTION OF EMBODIMENTS

Hereinafter, the present invention will be described based on embodiments with reference to the drawings. The same or equivalent components, members, and processings shown in the drawings are denoted by the same reference numerals, and repeated description thereof will be omitted as appropriate. Further, the embodiments do not intend to limit the scope of the present invention but exemplify the invention, and all of the features and the combinations thereof described in the embodiments are not necessarily essential to the invention.

### <First Embodiment>

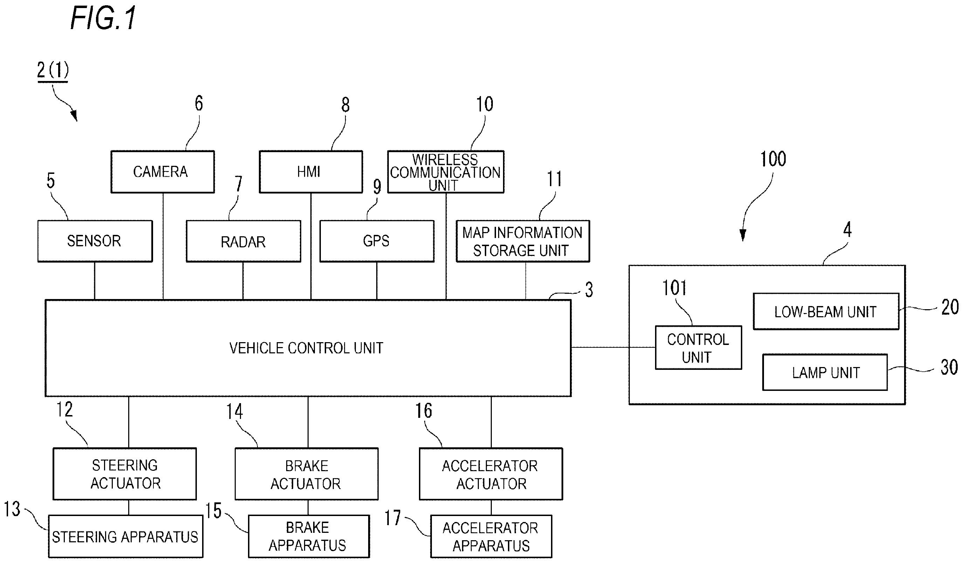

FIG. 1 is a block diagram of a vehicle system 2 in which a vehicle lamp system 100 according to a first embodiment of the present invention is incorporated. As shown in FIG. 1, the vehicle system 2 according to the present embodiment includes a vehicle control unit 3, a vehicle lamp 4, a sensor 5, a camera 6, a radar 7, a human machine interface (HMI) 8, a global positioning system (GPS) 9, a wireless communication unit 10, and a map information storage unit 11. The vehicle system 2 further includes a steering actuator 12, a steering apparatus 13, a brake actuator 14, a brake apparatus 15, an accelerator actuator 16, and an accelerator apparatus 17.

The vehicle control unit 3 is configured to control traveling of a vehicle 1. The vehicle control unit 3 is configured with, for example, an electronic control unit (ECU). The electronic control unit includes a microcontroller including a processor and a memory, and other electronic circuits (for example, a transistor and the like). The processor is, for example, a central processing unit (CPU), a micro processing unit (MPU), and/or a graphics processing unit (GPU). The memory includes a read only memory (ROM) in which various vehicle control programs (for example, an automatic driving artificial intelligence (AI) program and the like) are stored, and a random access memory (RAM) in which various pieces of vehicle control data are temporarily stored. The processor is configured to load a program designated from the various vehicle control programs stored in the ROM onto the RAM and execute various processings in cooperation with the RAM

The sensor 5 includes an acceleration sensor, a speed sensor, a gyro sensor, and the like. The sensor 5 is configured to detect a traveling state of the vehicle 1 and output traveling state information to the vehicle control unit 3. The sensor 5 may further include a seating sensor that detects whether a driver is seated in a driver seat, a face direction sensor that detects a direction of a face of the driver, an external weather sensor that detects an external weather condition, a human sensor that detects whether there is a person in the vehicle, and the like. The sensor 5 may further include an illuminance sensor that detects illuminance of a surrounding environment of the vehicle 1.

The camera (in-vehicle camera) 6 is, for example, a camera including an image-capturing element such as a charge-coupled device (CCD) or a complementary MOS (CMOS). Image-capturing of the camera 6 is controlled based on a signal transmitted from the vehicle control unit 3. The camera 6 can generate an image based on received visible light.

The radar 7 is a millimeter wave radar, a microwave radar, a laser radar, or the like. The radar 7 may include light detection and ranging or laser imaging detection and ranging (LiDAR). In general, the LiDAR is a sensor that emits invisible light in front of the LiDAR and acquires information such as a distance to an object, a shape of the object, and a material of the object based on emitted light and returned light. The camera 6 and the radar 7 (examples of the sensors) are configured to detect the surrounding environment of the vehicle 1 (other vehicles, a pedestrian, a road shape, a traffic sign, an obstacle, and the like), and output surrounding environment information to the vehicle control unit 3.

The HMI 8 is configured with an input unit that receives an input operation from the driver and an output unit that outputs traveling information and the like to the driver. The input unit includes a steering wheel, an accelerator pedal, a brake pedal, a driving mode changeover switch that switches driving modes of the vehicle 1, and the like. The output unit is a display that displays various pieces of traveling information.

The GPS 9 is configured to acquire current position information of the vehicle 1 and output the acquired current position information to the vehicle control unit 3. The wireless communication unit 10 is configured to receive information on another vehicle present around the vehicle 1 (for example, traveling information) from the other vehicle and transmit information on the vehicle 1 (for example, traveling information) to the other vehicle (vehicle-to-vehicle communication). Further, the wireless communication unit 10 is configured to receive infrastructure information from an infrastructure facility such as a traffic signal or a sign lamp and transmit the traveling information of the vehicle 1 to the infrastructure facility (road-to-vehicle communication). The map information storage unit 11 is an external storage device such as a hard disk drive that stores map information, and is configured to output the map information to the vehicle control unit 3.

When the vehicle 1 travels in an automatic driving mode, the vehicle control unit 3 automatically generates at least one of a steering control signal, an accelerator control signal, and a brake control signal based on the traveling state information, the surrounding environment information, the current position information, the map information, and the like. The steering actuator 12 is configured to receive the steering control signal from the vehicle control unit 3 and control the steering apparatus 13 based on the received steering control signal. The brake actuator 14 is configured to receive the brake control signal from the vehicle control unit 3 and control the brake apparatus 15 based on the received brake control signal. The accelerator actuator 16 is configured to receive the accelerator control signal from the vehicle control unit 3 and control the accelerator apparatus 17 based on the received accelerator control signal. In this way, traveling of the vehicle 1 is automatically controlled by the vehicle system 2 in the automatic driving mode.

In contrast, when the vehicle 1 travels in a manual driving mode, the vehicle control unit 3 generates the steering control signal, the accelerator control signal, and the brake control signal in accordance with a manual operation of the driver on the accelerator pedal, the brake pedal, and the steering wheel. In this way, since the steering control signal, the accelerator control signal, and the brake control signal are generated by the manual operation of the driver in the manual driving mode, the traveling of the vehicle 1 is controlled by the driver.

Next, the driving modes of the vehicle 1 will be described. The driving modes include the automatic driving mode and the manual driving mode. The automatic driving mode includes a fully automatic driving mode, an advanced driving support mode, and a driving support mode. In the fully automatic driving mode, the vehicle system 2 automatically performs all traveling controls including a steering control, a brake control, and an accelerator control, and the driver is in a state of being incapable of driving the vehicle 1. In the advanced driving support mode, the vehicle system 2 automatically performs all the traveling controls including the steering control, the brake control, and the accelerator control, and the driver is in a state of being capable of driving the vehicle 1 but does not drive the vehicle 1. In the driving support mode, the vehicle system 2 automatically performs some traveling controls of the steering control, the brake control, and the accelerator control, and the driver drives the vehicle 1 under driving support of the vehicle system 2. In contrast, in the manual driving mode, the vehicle system 2 does not automatically perform traveling control, and the driver drives the vehicle 1 without the driving support of the vehicle system 2.

A driving mode of the vehicle 1 may be switched by operating the driving mode changeover switch. In this case, the vehicle control unit 3 switches the driving mode of the vehicle 1 among the four driving modes (the fully automatic driving mode, the advanced driving support mode, the driving support mode, and the manual driving mode) in accordance with an operation of the driver on the driving mode changeover switch. Further, the driving mode of the vehicle 1 may be automatically switched based on information on a travelable section where an automatic driving vehicle can travel or a traveling-prohibited section where traveling of the automatic driving vehicle is prohibited, or information on an external weather condition. In this case, the vehicle control unit 3 switches the driving mode of the vehicle 1 based on these pieces of information. Further, the driving mode of the vehicle 1 may be automatically switched by using the seating sensor, the face direction sensor, and the like. In this case, the vehicle control unit 3 switches the driving mode of the vehicle 1 based on an output signal from the seating sensor or the face direction sensor.

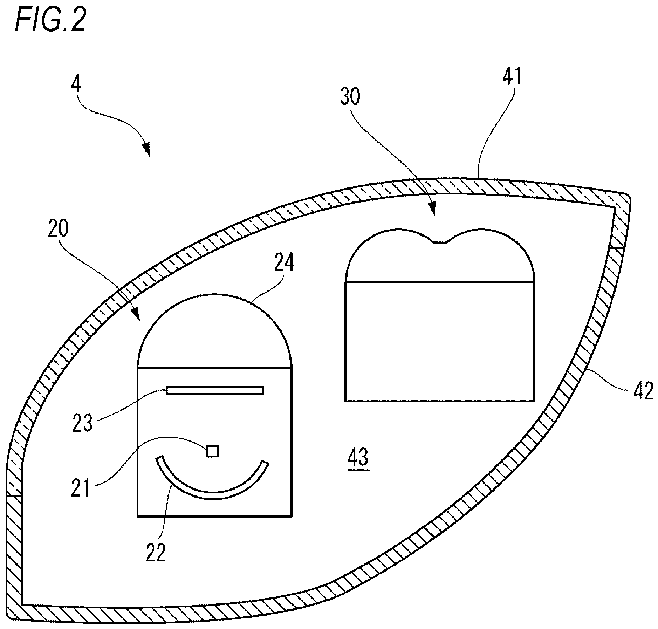

FIG. 2 is a cross-sectional view of the vehicle lamp 4 incorporated in the vehicle lamp system 100 according to the embodiment of the present invention. As shown in FIG. 2, the vehicle lamp 4 is mounted with a low-beam unit 20 capable of emitting a low beam and a lamp unit 30 capable of emitting infrared rays. The low-beam unit 20 and the lamp unit 30 are provided in a common lamp chamber 43 formed by an outer cover 41 and a housing 42. The vehicle lamp 4 is mounted on a front portion of the vehicle 1. The low-beam unit 20 and the lamp unit 30 are controlled by a control unit 101.

The low-beam unit 20 is a parabolic or projector lamp unit. In the illustrated example, the low-beam unit 20 includes a light source 21, a reflector 22, a shade 23, and a projection lens 24. As the light source 21 of the low-beam unit 20, an incandescent lamp including a filament such as a halogen lamp, a high intensity discharge (HID) lamp such as a metal halide lamp, a light emitting diode (LED), or the like can be used.

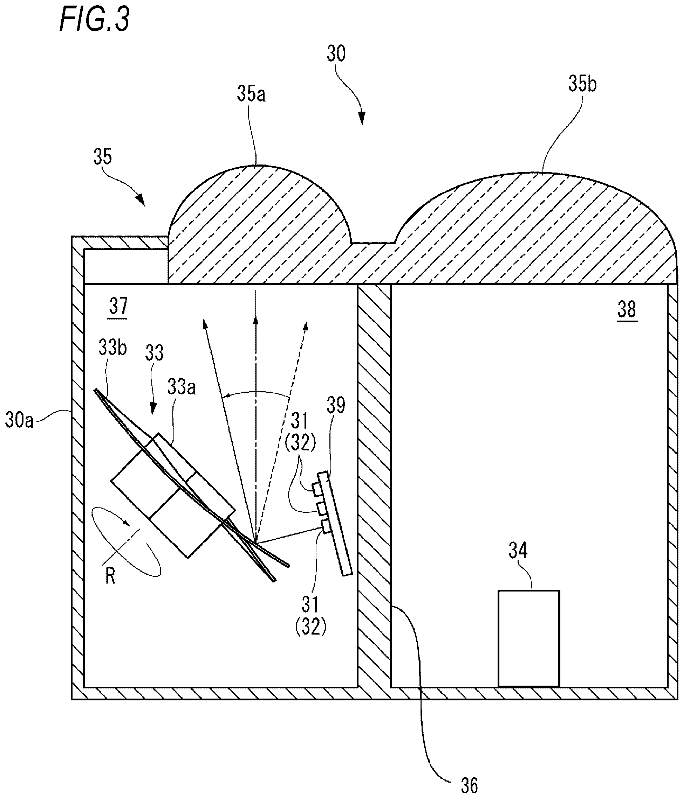

FIG. 3 is a schematic view showing an internal configuration of the lamp unit 30. As shown in FIG. 3, the lamp unit 30 includes a housing 30a, first light sources 31 that emit visible light for image-capturing by the camera 6, second light sources 32, a rotating reflector 33 (scanning unit), an optical sensor 34, a lens component 35, and a light-shielding wall 36. An inside of the housing 30a is partitioned into two spaces of a first lamp chamber 37 and a second lamp chamber 38 by the light-shielding wall 36. The first light sources 31, the second light sources 32, and the rotating reflector 33 are provided in the first lamp chamber 37. The optical sensor 34 is provided in the second lamp chamber 38.

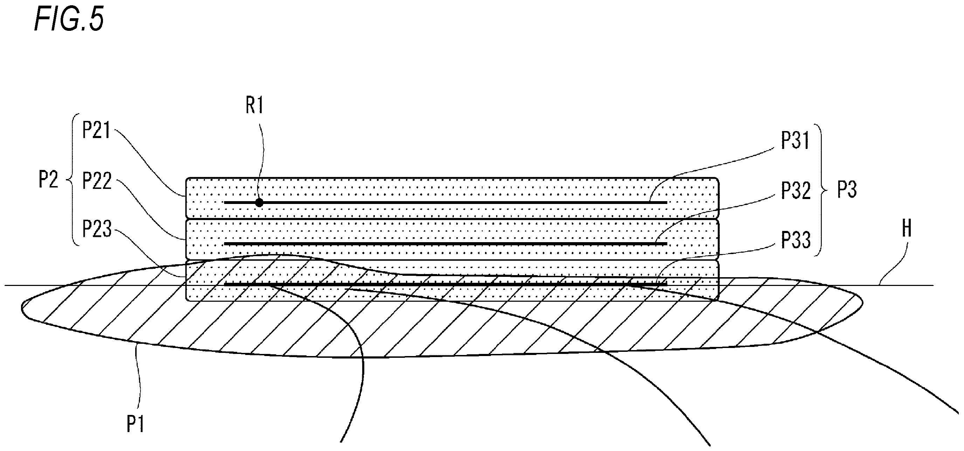

The first light source 31 is configured with a light emitting diode (LED) that emits the visible light. The first light source 31 may be configured with a laser diode (LD) other than the LED. In the present embodiment, the second light source 32 is configured with the LD that emits an infrared ray. The first light sources 31 and the second light sources 32 are mounted on a common substrate 39. In the present embodiment, the three first light sources 31 are arranged on a virtual straight line that extends in a vertical direction on the substrate 39. Similarly, the three second light sources 32 are arranged on the virtual straight line that extends in the vertical direction on the substrate 39. In FIG. 3, the second light sources 32 are arranged on a back side of a paper surface of the first light sources 31 and are not seen. As shown in FIG. 5, since the first light source 31 is required to irradiate a wider range than the second light source 32, it is preferable to adopt an LED having a large degree of diffusion of emitted light as the first light source 31 and use an LD having a small degree of diffusion of emitted light as the second light source 32.

The rotating reflector 33 is rotated around a rotation axis R. The rotating reflector 33 includes a shaft portion 33a that extends around the rotation axis R and two blades 33b that extend from the shaft portion 33a in a radial direction. A surface of the blade 33b is a reflective surface. The reflective surface has a twisted shape in which an angle with respect to the rotation axis R gradually changes in a circumferential direction. Specifically, the shape is formed such that when the visible light emitted from the first light source 31 is reflected by the reflective surface of the rotating reflector 33, a direction in which the visible light is reflected and emitted gradually changes from a left end to a right end, which will be described in detail with reference to FIG. 5. Further, the shape is formed such that when the infrared ray emitted from the second light source 32 is reflected by the reflective surface of the rotating reflector 33, a direction in which the infrared ray is emitted from the reflective surface gradually changes from the left end to the right end, which will be described in detail with reference to FIG. 5. Accordingly, the lamp unit 30 can scan and emit light from the first light sources 31 and the second light sources 32 in a region of a predetermined range.

The lens component 35 is provided in front of the housing 30a. The lens component 35 includes a first lens element 35a and a second lens element 35b. The first lens element 35a is located in front of the first lamp chamber 37. Light emitted from the first light sources 31 and the second light sources 32 and reflected by the rotating reflector 33 is incident on the first lens element 35a. The second lens element 35b is located in front of the second lamp chamber 38. The second lens element 35b collects light from a front side of the lamp and guides the collected light to the optical sensor 34.

In the present embodiment, the optical sensor 34 is a photodiode that detects an infrared ray. The photodiode outputs a signal corresponding to an intensity of received light. The optical sensor 34 has a highest sensitivity to a peak wavelength of infrared rays emitted from the second light sources 32. The optical sensor 34 is configured to detect reflected light of the infrared rays emitted from the second light sources 32 to the front side of the lamp.

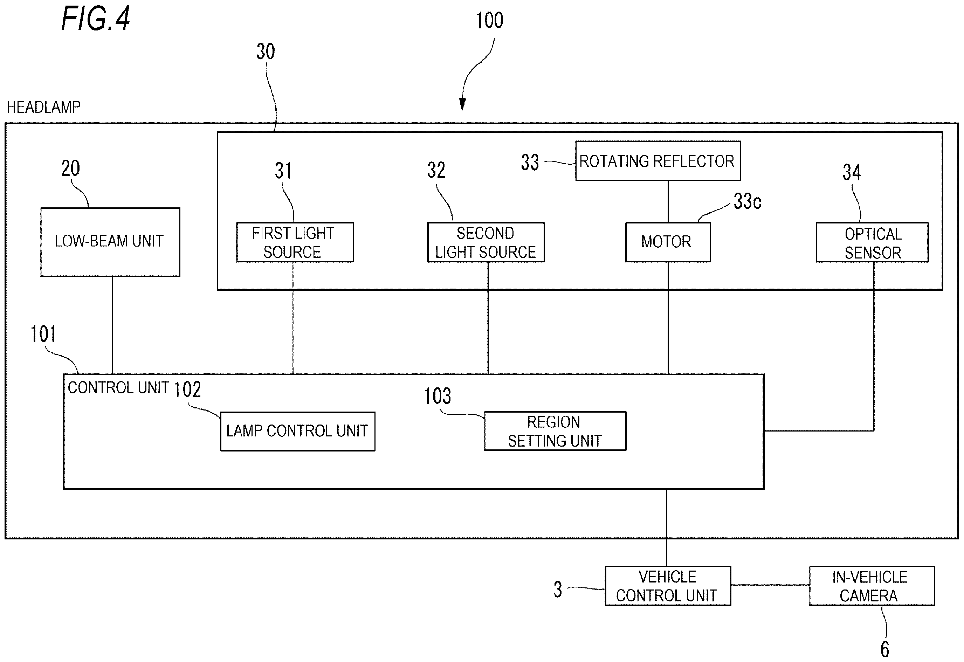

FIG. 4 is a system block diagram of the vehicle lamp system 100. As shown in FIG. 4, the vehicle lamp system 100 includes the control unit 101 in addition to the low-beam unit 20 and the lamp unit 30 described above. The control unit 101 is communicably connected to the low-beam unit 20 and the lamp unit 30. The control unit 101 includes a lamp control unit 102 that controls a turned-on state of the first light sources 31 and the second light sources 32, and a region setting unit 103 that sets a normal region, a dimming region, and an emphasis region, which will be described later.

The vehicle control unit 3 generates an instruction signal for controlling turning on and off of the vehicle lamp 4 when a predetermined condition is satisfied, and transmits the instruction signal to the control unit 101. The control unit 101 controls the low-beam unit 20, the first light sources 31, the second light sources 32, a motor 33c of the rotating reflector 33, and the like based on the received instruction signal.

FIG. 5 is a schematic diagram showing an irradiation range of each light emitted from the vehicle lamp 4 of the present embodiment. FIG. 5 appears on, for example, a vertical screen installed 25m in front of the vehicle lamp 4.

A range P1 is a low beam light distribution pattern irradiated by the low-beam unit 20. The low beam light distribution pattern is a well-known light distribution pattern.

A range P2 is an irradiation range of visible light emitted by the first light sources 31 of the lamp unit 30. The range P2 is a belt-shaped region that extends in a left-right direction. The range P2 includes ranges P21, P22, and P23. The range P21 is an irradiation range of the visible light emitted from the first light source 31 provided at an uppermost position on the substrate 39. The range P23 is an irradiation range of the visible light emitted from the first light source 31 provided at a lowermost position on the substrate 39. The range P22 is an irradiation range of the visible light emitted from the first light source 31 provided at an intermediate position on the substrate 39. The range P23 located at a lowermost position is preferably a region including an H-line. The range P2 may be a region similar to a known high beam light distribution pattern.

A range P3 is an irradiation range of infrared rays emitted by the second light sources 32 of the lamp unit 30. The range P3 is a linear region that extends in the left-right direction. The range P3 includes ranges P31, P32, and P33. The range P31 is an irradiation range of the infrared ray emitted from the second light source 32 provided at an uppermost position on the substrate 39. The range P33 is an irradiation range of the infrared ray emitted from the second light source 32 provided at a lowermost position on the substrate 39. The range P32 is an irradiation range of the infrared ray emitted from the second light source 32 provided at an intermediate position on the substrate 39. The range P31 is preferably provided in the range P21, the range P32 is preferably provided in the range P22, and the range P33 is preferably provided in the range P23.

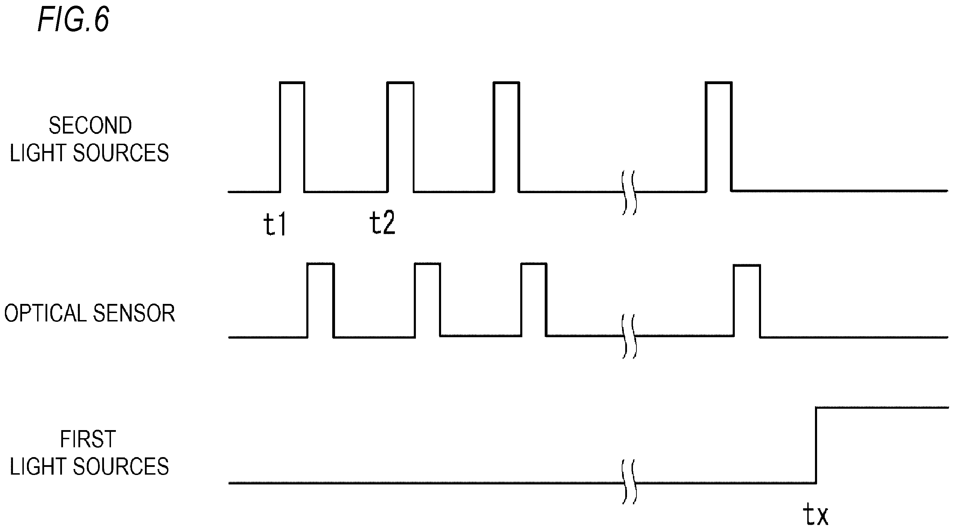

FIG. 6 is a time chart showing turn-on timings of the first light sources 31 and the second light sources 32 and an exposure timing of the optical sensor 34. As shown in FIG. 6, in the present embodiment, the control unit 101 turns off the first light sources 31 and turns on and off the second light sources 32 at a high speed while rotating the rotating reflector 33 such that an entire region of the range P3 is irradiated with infrared rays. The optical sensor 34 is exposed in synchronization with turning on and off of the second light sources 32.

For example, at time t1, a point R1 shown in FIG. 5 is irradiated with an infrared ray, other regions are not irradiated with the infrared ray, and the visible light is also not emitted from the first light sources 31. When the optical sensor 34 is exposed in the state, only reflected light of the infrared ray reflected by the point R1 can be detected. The control unit 101 determines that there is an object at the point R1 when an output of the optical sensor 34 is equal to or larger than a predetermined value, and determines that there is no object at the point R1 when the output of the optical sensor 34 is less than the predetermined value.

Next, at time t2, since the rotating reflector 33 is rotated, a point R2 is irradiated with infrared rays when the second light sources 32 are turned on. Similarly, since other regions are not irradiated with infrared rays and the visible light from the first light sources 31 is also not emitted, the optical sensor 34 only detects reflected light of the infrared rays reflected by the point R2 in the state. Based on the output of the optical sensor 34, the control unit 101 determines presence or absence of an object at the point R2.

Similarly, when the second light sources 32 are repeatedly turned on and off while the rotating reflector 33 is rotated, the control unit 101 can determine presence or absence of an object for all points within the range P3.

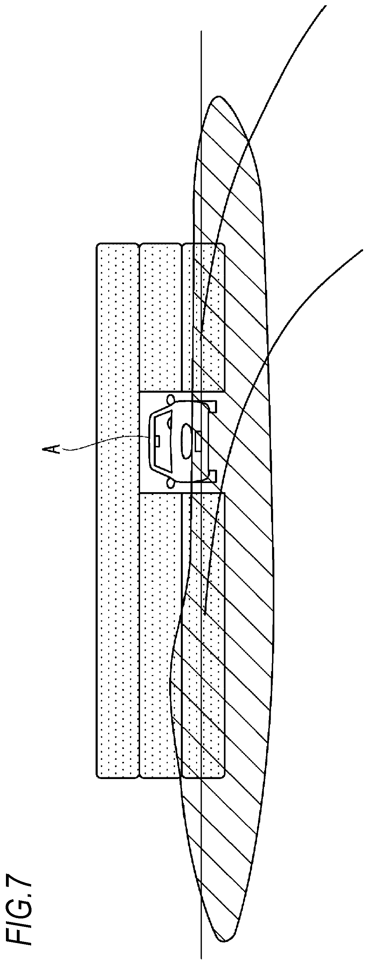

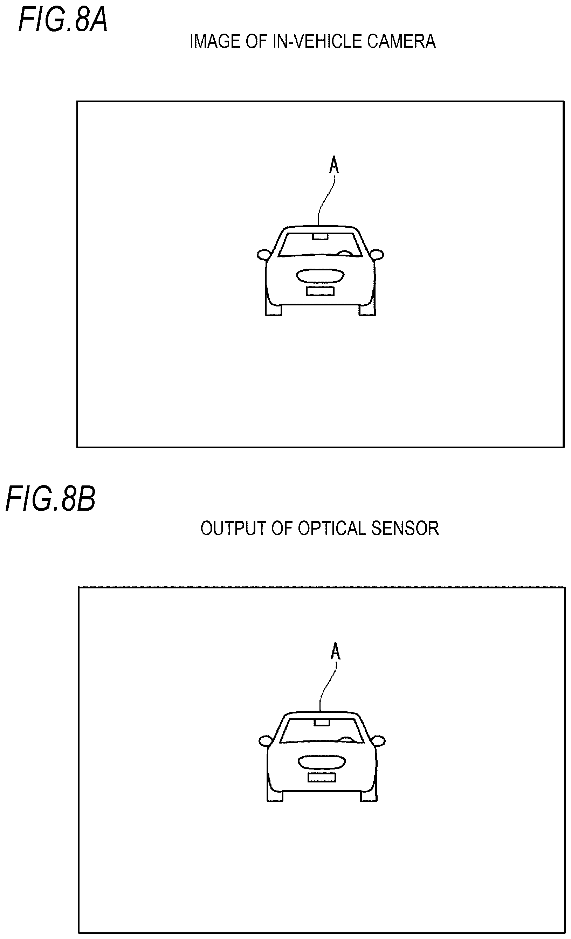

When the infrared rays are emitted from the second light sources 32 toward all the points within the range P3 by repeatedly turning on and off the second light sources 32 while the rotating reflector 33 is rotated, the control unit 101 starts control of turning on and off the first light sources 31 and the second light sources 32 in consideration of presence or absence of an object based on the output of the optical sensor 34 and presence or absence of an object based on the in-vehicle camera 6. FIG. 7 shows a light distribution pattern obtained by the control unit 101 controlling the first light sources 31. In the present embodiment, as shown in FIG. 7, a highly visible light distribution pattern that does not give glare to another vehicle A and brightly illuminates a wider range is formed. The control of the first light sources 31 and the second light sources 32 performed by the control unit 101 will be described using Figs. 8A to 11B.

FIG. 8A shows an image acquired by the in-vehicle camera 6 at a certain time s1. Based on such an image, the control unit 101 specifies a plurality of point groups occupied by the other vehicle A as first other-vehicle position. Alternatively, based on such an image, the control unit 101 specifies an azimuth angle formed by a region occupied by the other vehicle A as viewed from a reference point of the own vehicle as the first other-vehicle position.

Next, based on the output of the optical sensor 34, the control unit 101 acquires position information indicating that the other vehicle A is determined to be present. In the following description, the position where it is determined that the other vehicle A is present based on the output of the optical sensor 34 is referred to as a second other-vehicle position.

FIG. 8B is a schematic diagram in which the other vehicle A is estimated based on the output of the optical sensor 34 at the same time s1 as in FIG. 8A. The control unit 101 determines that the other vehicle A is present at a point where the output of the optical sensor 34 is equal to or larger than a predetermined value, and specifies a position of the point as the second other-vehicle position.

In this way, when the first other-vehicle position based on the image of the in-vehicle camera 6 and the second other-vehicle position based on the output of the optical sensor 34 are acquired as information on the same time s1, the control unit 101 compares the first other-vehicle position with the second other-vehicle position. When the first other-vehicle position and the second other-vehicle position have a similar spread at a similar position, it is indicated that an object detected at both positions is a common object. In this case, the region setting unit 103 of the control unit 101 sets a dimming region in the second other-vehicle position and sets normal regions in other regions. The lamp control unit 102 supplies a current having a first current value to the first light sources 31 to emit the visible light toward the normal regions. The lamp control unit 102 supplies a current having a second current value smaller than the first current value to the first light sources 31 to emit the visible light toward the dimming region.

In the present embodiment, the optical sensor 34 and the first light sources 31 are included in the lamp unit 30, and positions of the optical sensor 34 and the first light sources 31 are fairly close to each other. In contrast, the in-vehicle camera 6 is mounted on the vehicle at a position away from the lamp unit 30, and a distance between the in-vehicle camera 6 and the first light sources 31 is larger than a distance between the optical sensor 34 and the first light sources 31. Therefore, a direction of the other vehicle A as viewed from the in-vehicle camera 6 may be different from a direction of the other vehicle A as viewed from the first light sources 31. Therefore, for a certain object, when there are two pieces of position information (first other-vehicle position) of the other vehicle Abased on the in-vehicle camera 6 and position information (second other-vehicle position) of the other vehicle A based on the optical sensor 34, it is more accurate to set the dimming region based on the position information of the other vehicle A based on the optical sensor 34. Therefore, in the present embodiment, since the dimming region can be set at the position of the other vehicle A more accurately, for example, a margin set for the dimming region can be set to be narrow, and a wider range can be brightly illuminated.

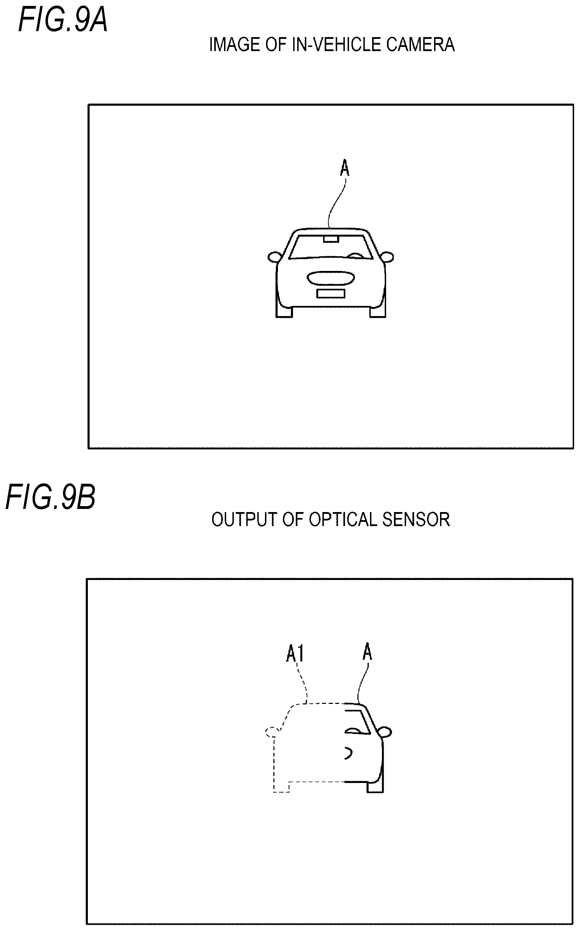

FIG. 9A shows an image acquired by the in-vehicle camera 6 at another time s2. FIG. 9B is a schematic diagram in which the other vehicle A is estimated based on the output of the optical sensor 34 at the same time s2. It is assumed that the control unit 101 acquires the first other-vehicle position and the second other-vehicle position as information on the same time s2.

Here, as shown in FIG. 9B, the optical sensor 34 cannot detect a part A1 or whole of the other vehicle A for some reason, and in contrast, as shown in FIG. 9A, the in-vehicle camera 6 can capture an image of the whole of the other vehicle A. In this case, the region setting unit 103 sets, as the emphasis region, a region A1 that is within a region where the other vehicle A is estimated to be present based on the image of the in-vehicle camera 6 and where the other vehicle A is determined not to be present by the output of the optical sensor 34, and sets other regions as the normal regions. The lamp control unit 102 supplies a current having the first current value to the second light sources 32 to emit the infrared rays toward the normal regions. The lamp control unit 102 supplies a current having the second current value larger than the first current value to the second light sources 32 to emit the infrared rays toward the emphasis region.

Accordingly, since the region A1 that cannot be detected by the optical sensor 34 is irradiated with the strong infrared rays, the other vehicle A is easily detected by the optical sensor 34. When the control unit 101 acquires the first other-vehicle position and the second other-vehicle position again and both can grasp the common object as shown in FIGS. 8A and 8B, the control unit 101 supplies the current having the first current value to the first light sources 31 to emit the visible light toward the normal regions and supplies the current having the second current value to the first light sources 31 to emit the visible light toward the dimming region as described above.

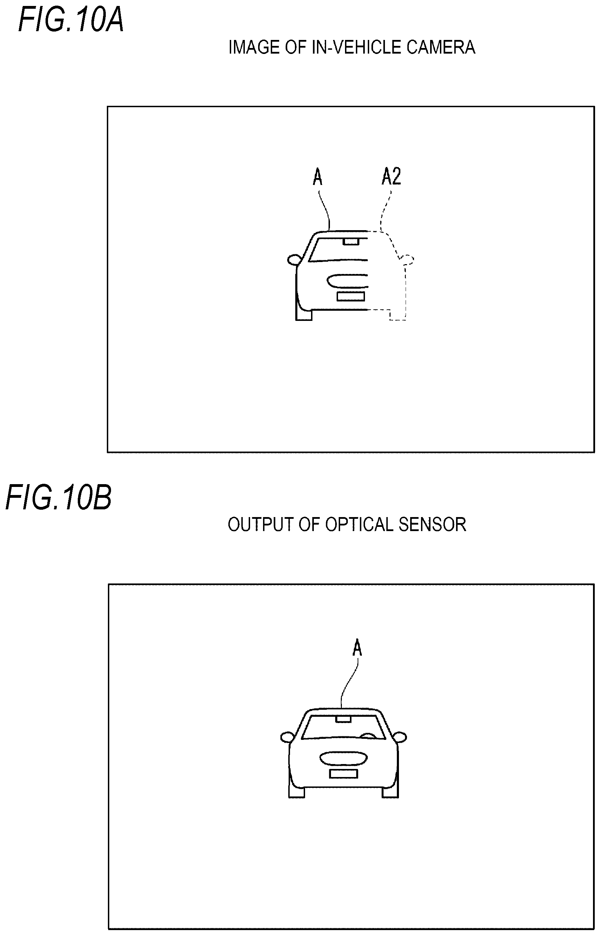

FIG. 10A shows an image acquired by the in-vehicle camera 6 at another time s3. FIG. 10B is a schematic diagram in which the other vehicle A is estimated based on the output of the optical sensor 34 at the same time s3. It is assumed that the control unit 101 acquires the first other-vehicle position and the second other-vehicle position as information on the same time s3.

Here, as shown in FIG. 10A, the in-vehicle camera 6 cannot capture an image of a part A2 or whole of the other vehicle A for some reason, and as shown in FIG. 10B, the optical sensor 34 can detect the whole of the other vehicle A. In this case, the region setting unit 103 sets, as the emphasis region, the region A2 that is within a region where the other vehicle A is determined to be present based on the output of the optical sensor 34 and where the other vehicle A is estimated not to be present by the image of the in-vehicle camera 6, and sets other regions as the normal regions. The lamp control unit 102 supplies a current having the first current value to the first light sources 31 to emit the visible light toward the normal regions. The lamp control unit 102 supplies a current having the second current value larger than the first current value to the first light sources 31 to emit the visible light toward the emphasis region.

Accordingly, since an image of a region that cannot be captured by the in-vehicle camera 6 is irradiated with the strong visible light, the in-vehicle camera 6 captures an image of the other vehicle A easily. When the control unit 101 acquires the first other-vehicle position and the second other-vehicle position again and both can grasp the common object as shown in FIGS. 8A and 8B, the control unit 101 supplies the current having the first current value to the first light sources 31 to emit the visible light toward the normal regions and supplies the current having the second current value to the first light sources 31 to emit the visible light toward the dimming region as described above.

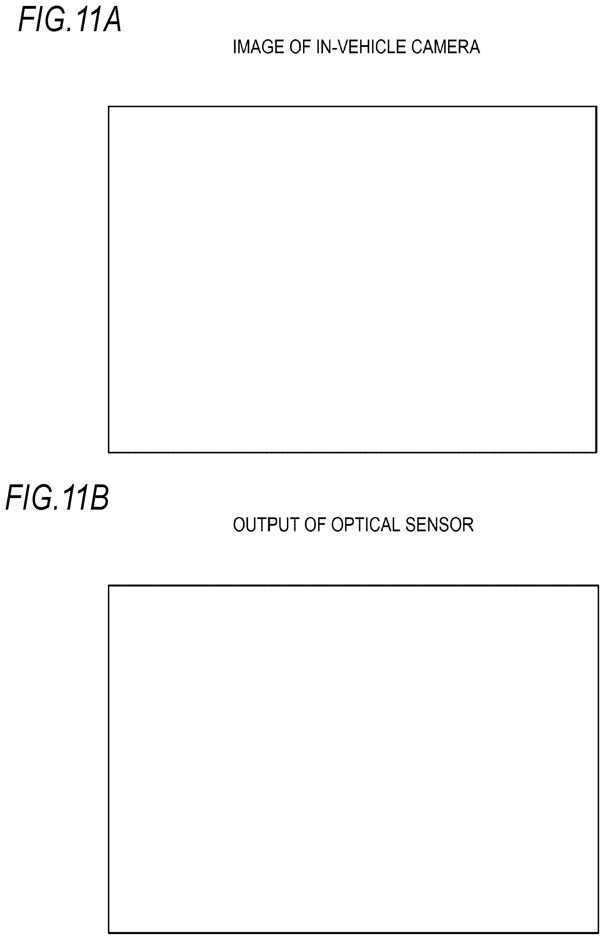

FIG. 11A shows an image acquired by the in-vehicle camera 6 at another time s4. FIG. 11B is a schematic diagram in which the other vehicle A is estimated based on the output of the optical sensor 34 at the same time s4. It is assumed that the control unit 101 acquires the first other-vehicle position and the second other-vehicle position as information on the same time s4.

Here, as shown in FIGS. 11A and 11B, when presence of the other vehicle A cannot be estimated from the image of the in-vehicle camera 6 and the output of the optical sensor 34, the region setting unit 103 sets the dimming region based on a vehicle speed and a steering angle of the vehicle from the vehicle control unit 3, and sets the normal regions in other regions. Further, the lamp control unit 102 supplies a current having the first current value to the first light sources 31 to emit the visible light toward the normal regions. The lamp control unit 102 supplies a current having the second current value larger than the first current value to the first light sources 31 to emit the visible light toward the emphasis region.

The present inventors have noticed that affinity between so-called ADB control and control of optical sensor light sources (second light sources 32) is high. This is because both of them are common in that the light sources are controlled so as to irradiate a specific region brighter/darker than other regions, and the dimming region and the emphasis region are set based on a target object or a person common to both of them. The present inventors have completed the present invention based on such notices.

According to the present invention, since a position of the other vehicle A can be accurately acquired by the two units of the in-vehicle camera 6 and the optical sensor 34, the in-vehicle camera 6 easily grasps a bicycle, a pedestrian, or the like adjacent to the other vehicle A by controlling the first light sources 31 such that not only the other vehicle A is irradiated with light.

Further, when the other vehicle A, the pedestrian, or the like can be grasped by at least one of the in-vehicle camera 6 and the optical sensor 34 by using the two units of the in-vehicle camera 6 and the optical sensor 34, the other vehicle A or the pedestrian is grasped more easily as the entire vehicle by controlling the first light sources 31 and the second light sources 32 such that the other detection unit that cannot grasp the other vehicle A, the pedestrian, or the like grasps the other vehicle A, the pedestrian, or the like easily.

In this way, according to the present invention, detection accuracy can be further improved by the in-vehicle camera 6 and the optical sensor 34.

Further, according to the present embodiment, the in-vehicle camera 6 acquires information by the visible light, and the optical sensor 34 acquires information by the infrared rays. The other vehicle can be estimated from the two different information sources of the detection target, and estimation accuracy of the other vehicle can be further improved.

In the above-described embodiment, the photodiode that detects the infrared rays is used as the optical sensor, but other infrared ray sensors such as an infrared ray camera may be used as the optical sensor.

### <Second Embodiment>

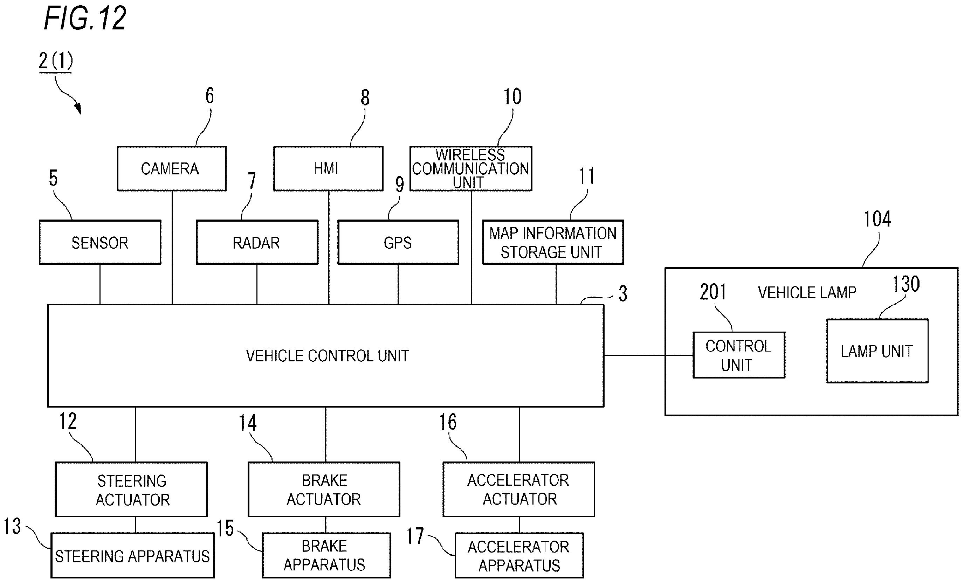

As a second embodiment of the present invention, a vehicle lamp 104 that can accurately set a dimming region will be described by using FIGS. 12 to 24.

FIG. 12 is a block diagram of the vehicle system 2 in which the vehicle lamp 104 according to the second embodiment of the present invention is incorporated. The vehicle 1 on which the vehicle system 2 is mounted is a vehicle (automobile) that can travel in an automatic driving mode. As shown in FIG. 12, the vehicle system 2 includes the vehicle control unit 3, the vehicle lamp 104, the sensor 5, the camera 6, the radar 7, the human machine interface (HMI) 8, the global positioning system (GPS) 9, the wireless communication unit 10, and the map information storage unit 11. Since the vehicle system 2 of the present embodiment is similar to the vehicle system 2 of the first embodiment (see FIG. 1), detailed description thereof will be omitted.

Also in the present embodiment, the vehicle lamp 104 (for example, a headlamp or the like) incorporated in the vehicle lamp system 100 is similar to the vehicle lamp 4 of the first embodiment described with reference to FIG. 2, and detailed description thereof will be omitted.

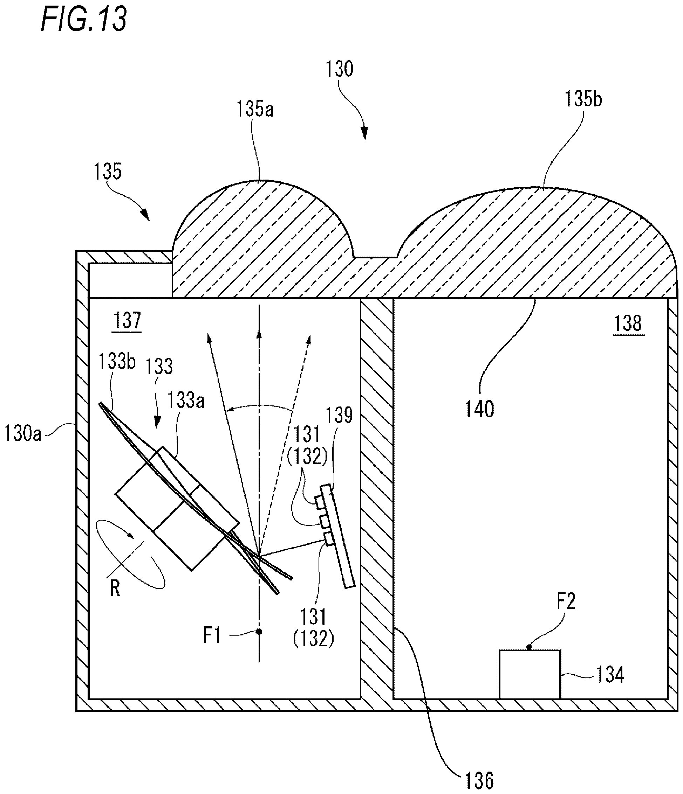

FIG. 13 is a schematic view showing an internal configuration of a lamp unit 130. As shown in FIG. 13, the lamp unit 130 includes a housing 130a, first light sources 131, second light sources 132, a rotating reflector 133 (scanning unit), an optical sensor 134, a lens component 135, a light-shielding wall 136, and a filter element 140.

The first light sources 131 emit visible light for the driver to visually recognize surroundings of the vehicle or to capture an image with the camera 6. The first light source 131 is configured with a light emitting diode (LED). The first light source 131 may be configured with a laser diode (LD) other than the LED. The second light source 132 emits light having a wavelength different from that of the first light source 131. In the present embodiment, the second light source 132 emits an infrared ray having a wavelength longer than that of the visible light. The second light source 132 is configured with an LD. The first light sources 131 and the second light sources 132 are mounted on a single common substrate 139.

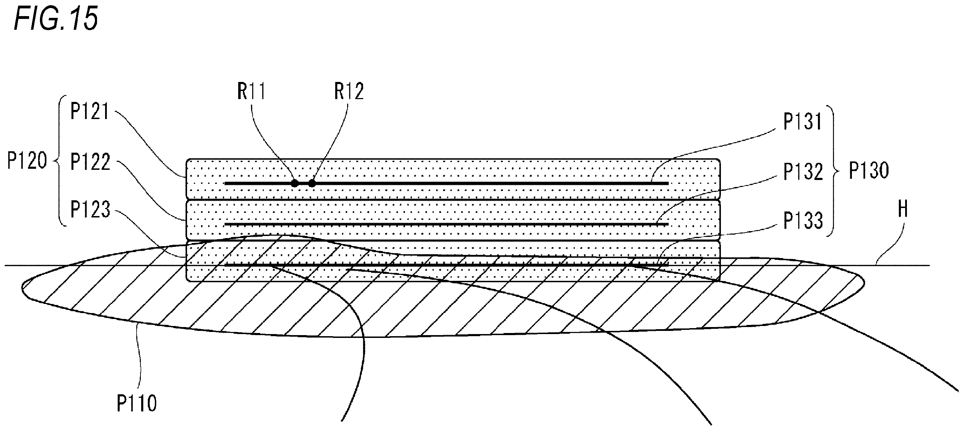

In the present embodiment, the three first light sources 131 are arranged on a virtual straight line that extends in a vertical direction on the common substrate 139. Similarly, the three second light sources 132 are arranged on a virtual straight line that extends in the vertical direction on the common substrate 139. In FIG. 13, the second light sources 132 are arranged on a back side of a paper surface of the first light sources 131 and are not seen. The first light source 131 is required to irradiate a range wider than that of the second light source 132 (for example, in FIG. 15 described later, an irradiation range of the second light sources 132 is a range P130, whereas an irradiation range of the first light sources 131 is a range P120). Therefore, it is preferable to adopt an LED having a large degree of diffusion of emitted light as the first light source 131, and use an LD having a small degree of diffusion of the emitted light as the second light source 132.

The rotating reflector 133 is configured to scan light emitted from the first light sources 131 and the second light sources 132 and emit the light toward a front side of the lamp. The rotating reflector 133 is rotated around the rotation axis R. The rotating reflector 133 includes a shaft portion 133a that extends around the rotation axis R and two blades 133b that extend from the shaft portion 133a in a radial direction. A surface of the blade 133b is a reflective surface. The reflective surface has a twisted shape in which an angle with respect to the rotation axis R gradually changes in a circumferential direction.

Specifically, the shape is formed such that when visible light emitted from the first light sources 131 is reflected by the reflective surface of the rotating reflector 133, a direction in which the visible light is reflected and emitted gradually changes from a left end to a right end, which will be described in detail with reference to FIG. 15. Further, the shape is formed such that when the infrared rays emitted from the second light sources 132 are reflected by the reflective surface of the rotating reflector 133, a direction in which the infrared rays are emitted from the reflective surface gradually changes from the left end to the right end, which will be described in detail with reference to FIG. 15. In the rotating reflector 133, a portion that reflects the light emitted from the first light sources 131 toward the front side of the lamp and a portion that reflects the light of the second light sources 132 toward the front side of the lamp are the same reflectors (the blades 133b) or an integrated reflector (the blades 133b). Accordingly, the lamp unit 130 can scan and emit the light from the first light sources 131 and the second light sources 132 in a region of a predetermined range.

In the present embodiment, the optical sensor 134 is a photodiode that detects the infrared rays. The optical sensor 134 outputs a signal corresponding to an intensity of the received light. The optical sensor 134 has a highest light-receiving sensitivity to a peak wavelength of the infrared rays emitted from the second light sources 132. The optical sensor 134 is configured to receive reflected light of the infrared rays emitted from the second light sources 132 to the front side of the lamp and detect a peak wavelength of the reflected light.

The lens component 135 is provided in front of the housing 130a. The lens component 135 includes a first lens element 135a and a second lens element 135b. Light emitted from the first light sources 131 and the second light sources 132 and reflected by the rotating reflector 133 is incident on the first lens element 135a. The first lens element 135a causes the incident light of the first light sources 131 and the incident light of the second light sources 132 to be emitted toward the front side of the lamp. A reflection point of the rotating reflector 133 is disposed near a focal point of the first lens element 135a. The second lens element 135b collects light from the front side of the lamp, for example, reflected light reflected by a target object such as an oncoming vehicle, and guides the collected light to the optical sensor 134. A light-receiving surface of the optical sensor 134 is disposed near a focal point of the second lens element 135b. A distance of a rear focal point F1 of the first lens element 135a is shorter than a distance of a rear focal point F2 of the second lens element 135b. The first lens element 135a and the second lens element 135b are integrally formed as a single lens component.

An inside of the housing 130a is partitioned into two spaces of a first lamp chamber 137 and a second lamp chamber 138 by a light-shielding wall 136. The first light sources 131, the second light sources 132, and the rotating reflector 133 are provided in the first lamp chamber 137. The optical sensor 134 is provided in the second lamp chamber 138. The first lens element 135a is disposed in front of the first lamp chamber 137. The second lens element 135b is disposed in front of the second lamp chamber 138. The light-shielding wall 136 is provided between an optical axis of the first lens element 135a and an optical axis of the second lens element 135b. For example, the light-shielding wall 136 is provided at a position where the light-shielding wall 136 shields light that is emitted from the first light sources 131 and is incident on the optical sensor 134 without being incident on the first lens element 135a. Further, the light-shielding wall 136 is provided at a position where the light-shielding wall 136 shields light that is emitted from the second light sources 132 and is incident on the optical sensor 134 without being incident on the first lens element 135a.

The filter element 140 is provided between the optical sensor 134 and the second lens element 135b. In the present embodiment, the filter element 140 is bonded to a back surface (surface facing the optical sensor 134) of the second lens element 135b. The filter element 140 is a filter that can reduce a peak wavelength of the light emitted from the first light sources 131. The filter element 140 reduces the peak wavelength of the light of the first light sources 131. Accordingly, the light emitted from the first light sources 131 and reflected in front of the lamp is prevented from being incident on the optical sensor 134.

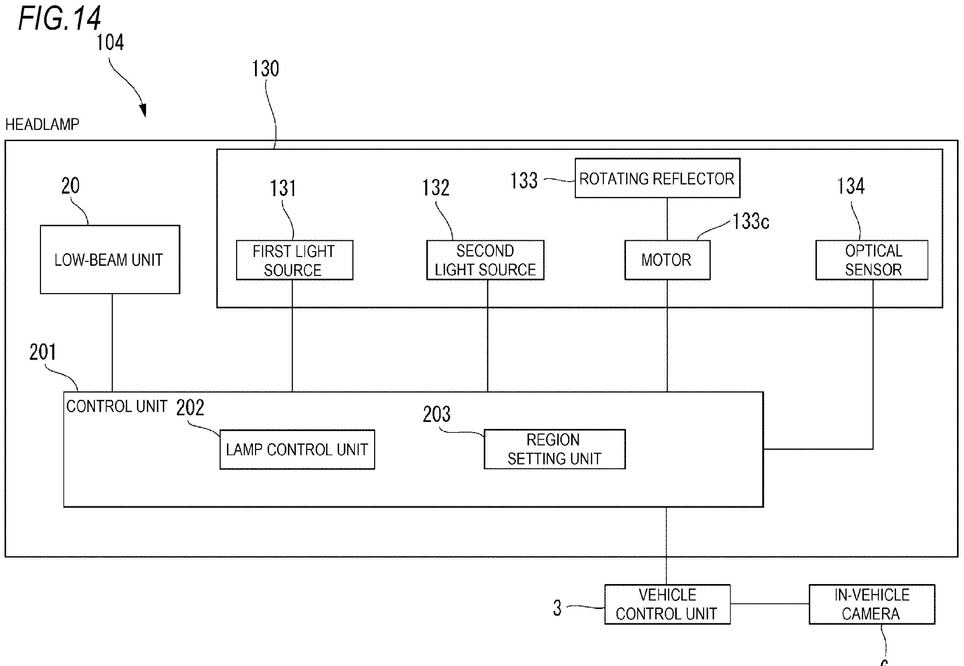

FIG. 14 is a system block diagram of the vehicle lamp 104. As shown in FIG. 14, the vehicle lamp 104 includes a control unit 201 in addition to the low-beam unit 20 and the lamp unit 130 described above. The control unit 201 is communicably connected to the low-beam unit 20 and the lamp unit 130. The control unit 201 includes a lamp control unit 202 that controls turned-on states of the first light sources 131 and the second light sources 132, and a region setting unit 203 that sets a dimming region irradiated with the light emitted from the first light sources 131 at an illuminance lower than those of other regions.

The control unit 201 is connected to the vehicle control unit 3 (see FIG. 1). The vehicle control unit 3 generates an instruction signal for controlling turning on and off of the vehicle lamp 104 when a predetermined condition is satisfied, and transmits the instruction signal to the control unit 201. The control unit 201 controls the low-beam unit 20, the first light sources 131, the second light sources 132, a motor 133c of the rotating reflector 133, and the like based on the received instruction signal.

FIG. 15 is a schematic diagram showing an irradiation range of each light emitted from the vehicle lamp 104 of the present embodiment. FIG. 15 appears on, for example, a vertical screen installed 25m in front of the vehicle lamp 104.

The range P110 is a low beam light distribution pattern irradiated by the low-beam unit 20. The low beam light distribution pattern is a well-known light distribution pattern.

A range P120 is an irradiation range of visible light emitted from the first light sources 131 of the lamp unit 130. The range P120 is a belt-shaped region that extends in a left-right direction. The range P120 includes ranges P121, P122, and P123. The range P121 is an irradiation range of the visible light emitted from the first light source 131 provided at an uppermost position on the common substrate 139. The range P123 is an irradiation range of the visible light emitted from the first light source 131 provided at a lowermost position on the common substrate 139. The range P122 is an irradiation range of the visible light emitted from the first light source 131 provided at an intermediate position on the common substrate 139. The range P123 located at a lowermost position is preferably a region including an H-line. The range P120 may be a region similar to a known high beam light distribution pattern.

The range P130 is an irradiation range of the infrared rays emitted from the second light sources 132 of the lamp unit 130. The range P130 is a linear region that extends in the left-right direction. The range P130 includes ranges P131, P132, and P133. The range P131 is an irradiation range of the infrared ray emitted from the second light source 132 provided at an uppermost position on the common substrate 139. The range P133 is an irradiation range of the infrared ray emitted from the second light source 132 provided at a lowermost position on the common substrate 139. The range P132 is an irradiation range of the infrared ray emitted from the second light source 132 provided at an intermediate position on the common substrate 139. The range P131 is preferably provided in the range P121, the range P132 is preferably provided in the range P122, and the range P133 is preferably provided in the range P123. A linear region of the range P130 preferably has an upper-lower width of 0.4 degrees or more in a vertical direction. A linear region of the range P133 overlaps with a horizontal line viewed from a mounting height of the vehicle lamp 104 mounted on the vehicle 1.

An illuminance of the light of the second light sources 132 with which the virtual vertical screen is irradiated, that is, an illuminance of the range P130 is preferably larger than an illuminance of the light of the first light sources 131 with which the virtual vertical screen is irradiated, that is, an illuminance of the range P120.

For example, when there are a plurality of light sources having light-emitting surfaces of the same size, it is preferable to use a light source having a large radiation intensity (light flux [W/sr] per unit solid angle) as the second light source. Alternatively, when there are a plurality of light sources having light-emitting surfaces of the same size and radiation intensity of the same magnitude, the second light sources may be arranged on a side close to a focal point of the first lens element 135a (the second light source may be a light source having a smaller projection image). Further, when there are a plurality of light sources having radiation intensity of the same magnitude, a light source having a large light-emitting surface may be used as the second light source.

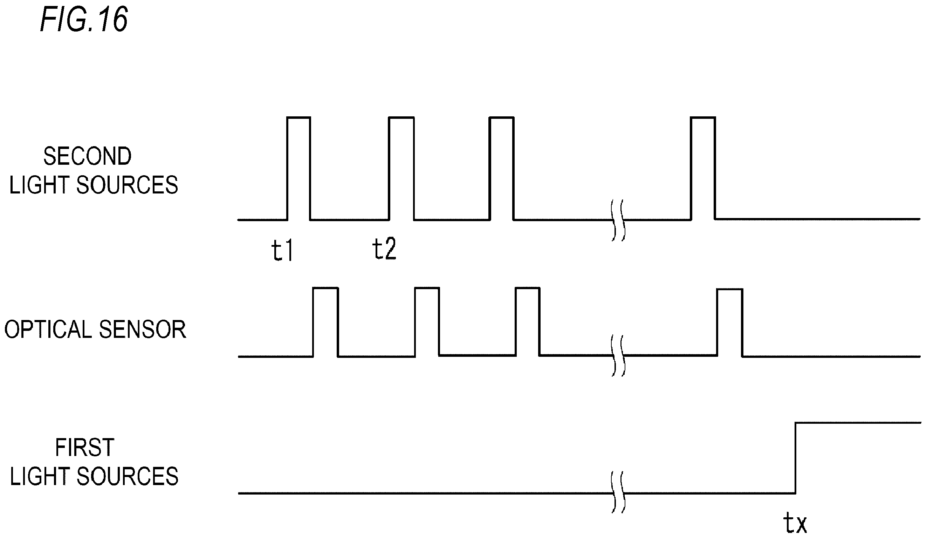

FIG. 16 is a time chart showing turn-on timings of the first light sources 131 and the second light sources 132 and an exposure timing of the optical sensor 134. As shown in FIG. 16, in the present embodiment, the control unit 201 turns on and off the second light sources 132 at a high speed while rotating the rotating reflector 133 such that the infrared rays are sequentially radiated to the range P130. Further, the optical sensor 134 is exposed in synchronization with turning on and off of the second light sources 132. When the second light sources 132 are turned on, the first light sources 131 are turned off.

For example, at time t1 in the time chart, a point R11 (see FIG. 15) is irradiated with the infrared rays, other regions are not irradiated with the infrared rays, and the visible light is also not radiated from the first light sources 131. When the optical sensor 134 is exposed in the state, only reflected light of the infrared rays reflected by the point R11 can be detected. The control unit 201 determines that there is an object at the point R11 when a value of the reflected light of the infrared rays detected by the optical sensor 134 is equal to or larger than a predetermined value, and determines that there is no object at the point R11 when the value of the reflected light of the infrared rays detected by the optical sensor 134 is less than the predetermined value.

Next, at time t2, since the rotating reflector 133 is rotated, a point R12 is irradiated with the infrared rays when the second light sources 132 are turned on. As in the case of the point R11, since other regions are not irradiated with the infrared rays and the visible light from the first light sources 131 is also not irradiated, the optical sensor 134 only detects reflected light of the infrared rays reflected by the point R12 in the state. The control unit 201 determines presence or absence of an object at the point R12 based on the output of the reflected light of the infrared rays detected by the optical sensor 134.

Similarly, when the second light sources 132 are repeatedly turned on and off while the rotating reflector 133 is rotated, the control unit 201 can determine the presence or absence of an object for all points in the range P130.

When the second light sources 132 are repeatedly turned on and off while the rotating reflector 133 is rotated and the infrared rays are radiated from the second light sources 132 toward all the points in the range P130, the control unit 201 starts control of turning on and off the first light sources 131 and the second light sources 132 in consideration of presence or absence of an object based on the output of the optical sensor 134 and presence or absence of an object based on an image captured by the in-vehicle camera 6.

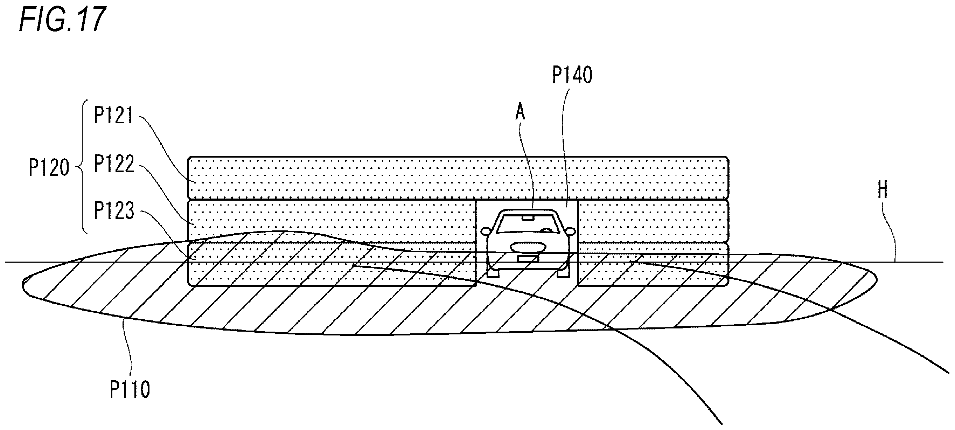

FIG. 17 shows a light distribution pattern obtained by the control unit 201 controlling the first light sources 131. In the present embodiment, as shown in FIG. 17, a highly visible light distribution pattern that does not give glare to the other vehicle (oncoming vehicle) A and brightly illuminates a wider range is formed. In order to form such a light distribution pattern, the control unit 201 performs control as follows. When the control unit 201 determines presence or absence of an object based on the output of the optical sensor 134 and the image of the in-vehicle camera 6, the region setting unit 203 sets a dimming region P140 at a position including the determined object (oncoming vehicle A). The control unit 201 supplies a current having a first current value to the first light sources 131, and emits the visible light at a normal illuminance toward a range excluding the dimming region P140 in the range P120 that is the irradiation range of the first light sources 131 by the lamp control unit 202. Then, the control unit 201 supplies a current having a second current value smaller than the first current value to the first light sources 131, and emits the visible light at an illuminance lower than the normal illuminance toward the dimming region P140 by the lamp control unit 202.

When observed from the own vehicle 1, a preceding vehicle (including the oncoming vehicle) is observed as an object longer in a left-right direction than in an upper-lower direction. When the preceding vehicle is detected as a target object, the region setting unit 203 of the control unit 201 sets a region between left and right end portions of the preceding vehicle as a dimming region. Therefore, the optical sensor 134 is required to have a detection range long in a left-right direction. On the contrary, information on a vertical direction of the preceding vehicle is less important than information on the left and right end portions of the preceding vehicle. Therefore, it is not necessary to irradiate the entire front side of the lamp with the light of the second light sources 132, and it is sufficient to irradiate a linear region that extends in a horizontal direction with the light of the second light sources 132.

In contrast, in a case where a target object is detected with high accuracy, for example, when the detected target object is an oncoming vehicle, it is desired to improve visibility of the driver or the in-vehicle camera 6 by not irradiating the oncoming vehicle with the visible light and irradiating other regions with the visible light. In this case, it is preferable that a second position where the light of the second light sources 132 used to detect the target object is emitted is close to a first position where the light of the first light sources 131 is emitted. The second position is a position of the reflection point of the rotating reflector 133 that reflects the light emitted from the second light sources 132 toward the front side of the lamp, and the first position is a position of the reflection point of the rotating reflector 133 that reflects the light emitted from the first light sources 131 toward the front side of the lamp.

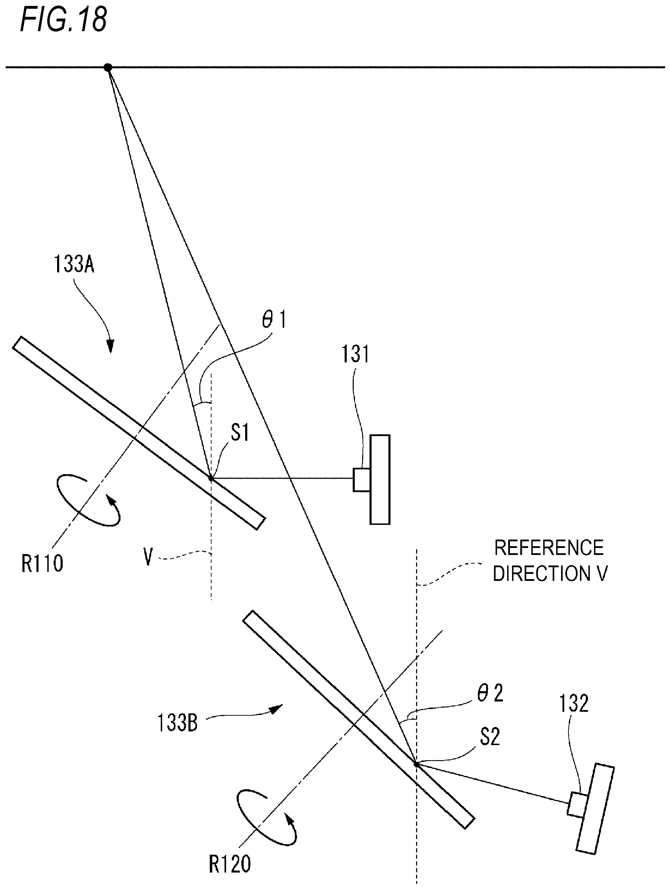

For example, as shown in FIG. 18, when the light of the second light sources 132 is emitted toward a region shifted leftward by an angle θ2 with respect to a reference direction V that extends straight forward from the vehicle 1 and strong reflected light is detected by the optical sensor 134, it can be estimated that an oncoming vehicle is present in the region. At this time, in the configuration of FIG. 18, unlike the configuration of the present embodiment, since the first position (a position of a reflection point S1) and the second position (a position of a reflection point S2) are separated from each other, in order to emit the light of the first light sources 131 toward a region irradiated with the light of the second light sources 132, in a direction in which the light of the first light sources 131 is emitted, an angle θ1 formed with respect to the reference direction V is different from the angle θ2. Therefore, in order to perform control so as not to irradiate the oncoming vehicle with the light (visible light) of the first light sources 131, it is necessary to calculate the angle θ1 formed with respect to the direction in which the light of the first light sources 131 is radiated, that is, the reference direction V, by correcting the angle θ2. Further, since the light of the first light sources 131 and the light of the second light sources 132 are scanned and emitted to the front side of the lamp by the rotating reflector 133, a direction in which these lights are emitted is determined by a rotation phase of the rotating reflector 133. At this time, as shown in FIG. 18, when the light of the first light sources 131 and the light of the second light sources 132 are emitted by the different rotating reflectors 133A and 133B, it is necessary to calculate at which rotation phase the light of the first light sources 131 is emitted toward the target object. Then, it is necessary to perform complicated control of turning off the first light sources 131 at a timing tm at which the rotating reflector 133A that reflects the light of the first light sources 131 is rotated to the calculated rotation phase. In FIG. 18, an axis R110 is a rotation axis of the rotating reflector 133A, and an axis R120 indicates a rotation axis of the rotating reflector 133B.

On the contrary, in the vehicle lamp 104 according to the present embodiment, a portion from which the light from the first light sources 131 is emitted and a portion from which the light from the second light sources 132 is emitted are configured with the same blades 133b or the integrated blades 133b. That is, a position of the reflection point of the rotating reflector 133 that reflects the light emitted from the first light sources 131 toward the front side of the lamp and a position of the reflection point of the rotating reflector 133 that reflects the light emitted from the second light sources 132 toward the front side of the lamp are substantially the same position. Therefore, in the example of FIG. 18 described above, since the angle θ1 and the angle θ2 are equal to each other, the first light sources 131 may be turned off in a region where presence of the oncoming vehicle is estimated based on the light of the second light sources 132 or at a timing at which the light of the second light sources 132 is emitted to the estimated oncoming vehicle. That is, it is not necessary to calculate the angle θ1 and the timing tm. In this way, according to the vehicle lamp 104, when the turned-on state of the first light sources 131 is controlled, it is not necessary to calculate the angle and the timing that require complicated calculation, and it is possible to accurately set the dimming region at low cost.

According to the vehicle lamp 104, the rotating reflector 133 is disposed near the focal point of the first lens element 135a, and the optical sensor 134 is disposed near the focal point of the second lens element 135b. Therefore, the light of the first light sources 131 and the second light sources 132 can be accurately emitted in an optional direction, and detection accuracy of the optical sensor 134 can be further improved. Further, since the first lens element 135a and the second lens element 135b are integrally formed as a single lens component, alignment can be accurately performed, and the number of components can be reduced.

According to the vehicle lamp 104, a rear focal point distance of the first lens element 135a is configured to be shorter than a rear focal point distance of the second lens element 135b. The light (visible light) of the first light sources 131 is desired to irradiate a wide range in order to improve the visibility of the driver or the in-vehicle camera 6. The optical sensor 134 is desired to detect reflected light from a specific narrow region. Therefore, by shortening the rear focal point distance of the first lens element 135a, it is possible to irradiate a wide range with the light of the first light sources 131, and by lengthening the rear focal point distance of the second lens element 135b, it is possible to guide light incident from the narrow range to the optical sensor 134.

According to the vehicle lamp 104, the inside of the housing 130a is partitioned into the first lamp chamber 137 and the second lamp chamber 138 by the light-shielding wall 136, and the light of the first light sources 131 and the second light sources 132 arranged in the first lamp chamber 137 is not directly incident on the optical sensor 134 disposed in the second lamp chamber 138 without being emitted to an outside of the housing 130a. Therefore, during light detection by the optical sensor 134, it is possible to prevent the light of the first light sources 131 from being incident on the optical sensor 134, and it is possible to improve the detection accuracy of the optical sensor 134.

According to the vehicle lamp 104, the filter element 140 that reduces the peak wavelength of the light emitted from the first light sources 131 is provided between the optical sensor 134 and the second lens element 135b. Therefore, during the light detection by the optical sensor 134, the filter element 140 can also prevent the light of the first light sources 131 from being incident on the optical sensor 134, and the detection accuracy of the optical sensor 134 can be further improved.

According to the vehicle lamp 104, since the first light sources 131 and the second light sources 132 provided in the housing 130a are provided on the common substrate 139, the number of components can be reduced, and mounting position accuracy of the first light sources 131 and the second light sources 132 can be improved.

According to the vehicle lamp 104, the linear regions P131, P132, and P133 where the light emitted from the second light sources 132 extends in the horizontal direction have the upper-lower width of 0.4 degrees or more in the vertical direction. In this way, by forming the linear regions P131, P132, and P133 into a shape having the width in the upper-lower direction, it is easy to improve detection accuracy of the other vehicle (the preceding vehicle, the oncoming vehicle, or the like) by the optical sensor 134.

According to the vehicle lamp 104, the illuminance of the light of the second light sources 132 with which the virtual vertical screen provided at a predetermined position in front of the lamp is irradiated is larger than the illuminance of the light of the first light sources 131 with which the virtual vertical screen is irradiated. Therefore, when the target object is irradiated with the light emitted from the second light sources 132, it is possible to obtain strong reflected light from the target object. Therefore, it is easy to improve the detection accuracy of the optical sensor 134 that detects the reflected light.

The light emitted from the first light sources 131 and reflected by the rotating reflector 133 and the light emitted from the second light sources 132 and reflected by the rotating reflector 133 are emitted to the front side of the lamp via the common first lens element 135a. With such a configuration, for example, the number of components such as lens elements can be reduced.

According to the vehicle lamp 104, the first light source 131 is configured to emit the visible light, and the second light source 132 is configured to emit the infrared ray. In this way, since the infrared rays are emitted from the second light sources 132, it is possible to specify a position of the other vehicle (the preceding vehicle, the oncoming vehicle, or the like) without giving glare to the other vehicle. Further, the dimming region P140 is set by controlling the first light sources 131 that emit the visible light based on the specified position information of the other vehicle, so that the glare to the other vehicle can be reduced.

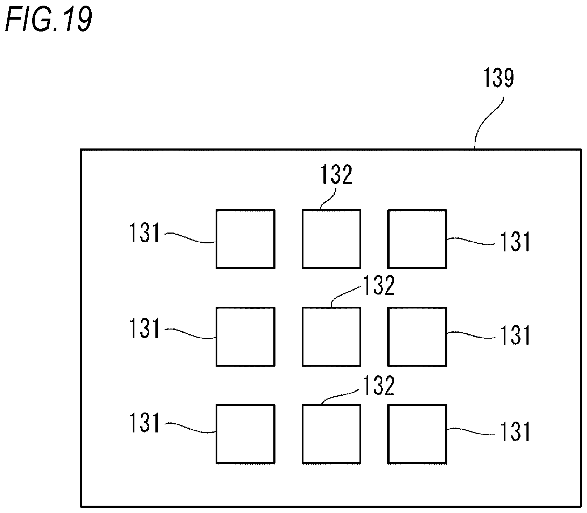

In the above-described embodiment, the configuration in which the three first light sources 131 and the three second light sources 132 are linearly arranged adjacent to each other on the common substrate 139 has been described, but the present invention is not limited thereto. For example, as shown in FIG. 19, the three first light sources 131 arranged in a straight line may be provided adjacent to each other on both side portions of the three second light sources 132 arranged in a straight line. The number of first light sources 131 may be larger than the number of second light sources 132. According to this configuration, it is possible to widen and brighten the region irradiated with the light of the first light sources 131 with a simple configuration.

The first light source 131 may emit an infrared ray, the second light source 132 may emit an infrared ray having a peak at a wavelength different from that of the light emitted by the first light source 131, and the optical sensor 134 may have high light-receiving sensitivity to the peak of the infrared ray emitted by the second light source 132. Even when light sources of infrared rays are used as the first light sources 131 in this way, occurrence of halation in the infrared ray camera mounted on the oncoming vehicle can be prevented by controlling the first light sources 131 to set the dimming region P140 in a region including the oncoming vehicle.

The scanning unit (rotating reflector 133) may scan the light emitted from the second light sources 132 such that the light emitted from the second light sources 132 irradiates a plurality of linear regions P130 (P131, P132, and P133) that are separated from one another in the vertical direction and that extend in the horizontal direction. According to this configuration, it is possible to improve the detection accuracy of the other vehicle (the preceding vehicle, the oncoming vehicle, or the like) by the optical sensor 134.

The light emitted from the plurality of second light sources 132 may irradiate the linear regions P130 (P131, P132, and P133) different from one another. According to this configuration, a method of estimating a position of the other vehicle (the preceding vehicle, the oncoming vehicle, or the like) is simplified. For example, in a case where two light sources A and B are provided as the second light sources, when the optical sensor 134 does not detect the other vehicle when the second light source A is turned on and the optical sensor 134 detects the other vehicle when the second light source B is turned on, it can be estimated that the other vehicle is present at a height position of the linear regions irradiated by the second light source B. When the second light sources A and B both irradiate the same linear regions, the other vehicle cannot be estimated by such a method.

An instantaneous radiation intensity (instantaneous input current) of the second light sources 132 may be configured to be larger than an instantaneous radiation intensity of the first light sources 131. According to this configuration, when the target object is irradiated with the light emitted from the second light sources 132, it is possible to obtain strong reflected light from the target object. Accordingly, it is easy to improve the detection accuracy of the optical sensor 134 that detects the reflected light.

A turn-on duty of the second light sources 132 may be configured to be smaller than a turn-on duty of the first light sources 131. According to this configuration, it is possible to obtain the strong reflected light of the second light sources 132, and it is easy to improve the detection accuracy of the optical sensor 134.

A light-emitting diode (LED) may be used as the first light source 131, and a laser diode (LD) may be used as the second light source 132. According to this configuration, since the laser diode is more capable of emitting light difficult to diffuse than the LED, the detection accuracy of the optical sensor 134 can be improved.

The first light source 131 may be a light-emitting diode (LED) that emits an infrared ray, and the second light source 132 may be a laser diode (LD) that emits an infrared ray having a wavelength different from a peak wavelength of the infrared ray emitted by the first light source 131. According to this configuration, since the light-emitting diode can irradiate a wide range with light, the light-emitting diode is suitable for image-capturing by the infrared ray camera. Further, since the laser diode can emit the light difficult to diffuse, the laser diode can irradiate only a specific point with light, and estimation accuracy of a position of an object of the optical sensor 134 can be improved.

### (First Modification)

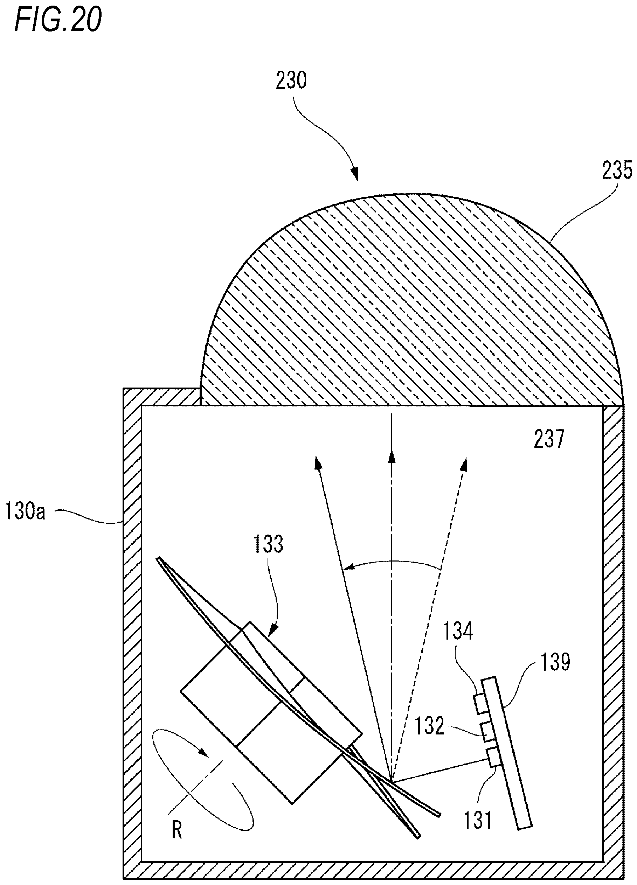

FIG. 20 is a schematic view showing an internal structure of a lamp unit 230 according to a first modification of the second embodiment of the present invention.

As shown in FIG. 20, the lamp unit 230 includes a lamp chamber 237 in the housing 130a. The lamp chamber 237 is provided with the first light source 131, the second light source 132, the rotating reflector 133, and the optical sensor 134. The first light source 131, the second light source 132, and the optical sensor 134 are provided on the common substrate 139. The first light source 131, the second light source 132, and the optical sensor 134 on the common substrate 139 are collectively provided near a focal position of a lens element 235 (an example of a lens component). According to this configuration, since the lamp unit 230 can be configured with the single lamp chamber 237, the number of components can be reduced as compared with the lamp unit 130 shown in FIG. 13. Further, since the first light source 131, the second light source 132, and the optical sensor 134 are provided on the common substrate 139 in the housing 130a, it is easy to improve mounting position accuracy of each member. The first light source 131, the second light source 132, the rotating reflector 133, the optical sensor 134, and the common substrate 139 are similar to those in the second embodiment described above.

### (Second Modification)

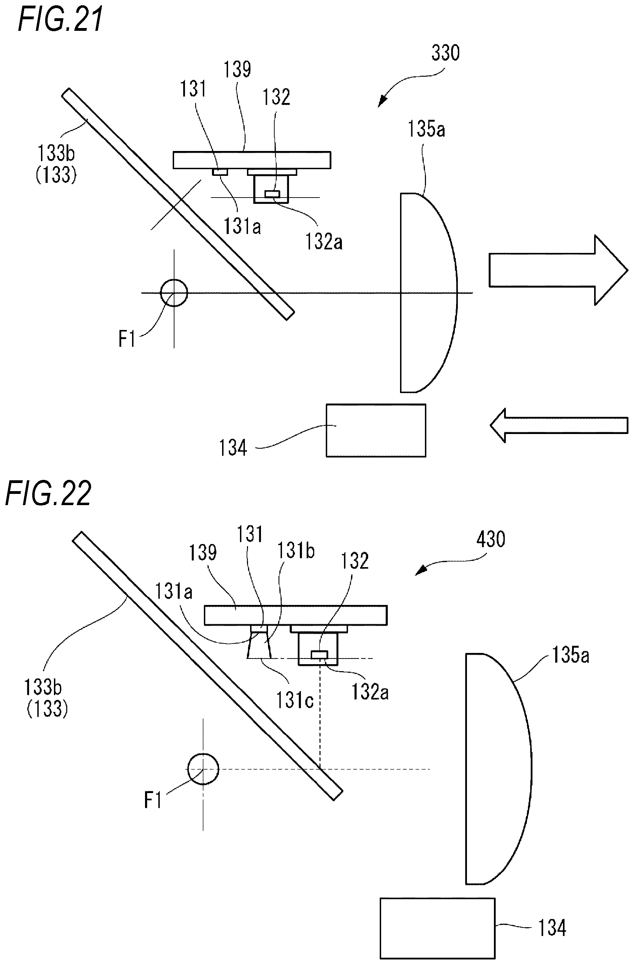

FIG. 21 is a schematic diagram showing an internal structure of a lamp unit 330 according to a second modification of the second embodiment of the present invention. Also in the present modification, the first light source 131, the second light source 132, the rotating reflector 133, the optical sensor 134, the lens component 135, and the common substrate 139 are similar to those in the second embodiment described above.

As shown in FIG. 21, in the lamp unit 330, a height of a light-emitting unit 131a of the first light source 131 from the common substrate 139 is configured to be a height different from a height of a light-emitting unit 132a of the second light source 132 from the common substrate 139. In this example, an LED is used as the first light source 131, and an LD (laser diode) is used as the second light source 132. The laser diode includes a cylindrical housing. In contrast, the LED does not include such a housing. Therefore, a position of the light-emitting unit 132a of the second light source 132 is configured to be higher than a position of the light-emitting unit 131a of the first light source 131. The light-emitting unit 132a of the second light source 132 is provided at a position closer to a virtual rear focal point of the first lens element 135a than the light-emitting unit 131a of the first light source 131. The virtual rear focal point is located on a virtual optical axis of the first lens element 135a that extends while being reflected by the blades 133b of the scanning unit (rotating reflector 133).

According to this configuration, since the light-emitting unit 132a of the second light source 132 is provided at the position close to the virtual rear focal point, light of the second light source 132 can be accurately emitted in a desired direction. Therefore, a target object such as another vehicle can be accurately detected by the optical sensor 134, and accuracy of specifying the dimming region P140 by the region setting unit 203 can be improved.

The first light source 131, the second light source 132, the rotating reflector 133 (blades 133b), and the optical sensor 134 are provided in the common lamp chamber of the lamp unit 330. Light emitted from the first light source 131 and the second light source 132 passes through the first lens element 135a and is irradiated to a front side of the lamp. The light of the second light source 132 is reflected by the target object and becomes reflected light. The optical sensor 134 is provided at a position where the reflected light reflected by the target object is directly incident on the optical sensor 134 without passing through the first lens element 135a. According to this configuration, since the reflected light is directly incident on the optical sensor 134, it is possible to prevent erroneous detection of the optical sensor 134.

### (Third Modification)

FIG. 22 is a schematic diagram showing an internal structure of a lamp unit 430 according to a third modification of the second embodiment of the present invention. Also in the present modification, the first light source 131, the second light source 132, the rotating reflector 133, the optical sensor 134, the lens component 135, and the common substrate 139 are similar to those in the second embodiment described above.

As shown in FIG. 22, in the lamp unit 430, a primary optical component 131b is provided on the first light source 131. Light emitted from the first light source 131 is emitted via the primary optical component 131b. Since the primary optical component 131b is provided, a height of a light-emitting portion 131c of the primary optical component 131b of the first light source 131 from the common substrate 139 is configured to be the same as a height of the light-emitting unit 132a of the second light source 132 from the common substrate 139. The light-emitting portion 131c of the primary optical component 131b and the light-emitting unit 132a of the second light source 132 are located on a virtual optical axis of the first lens element 135a that extends while being reflected by the blades 133b of the scanning unit (rotating reflector 133). The light-emitting portion 131c and the light-emitting unit 132a are provided at positions close to a virtual rear focal point of the first lens element 135a on the virtual optical axis. Since FIG. 22 is schematically shown, the first light source 131 and the second light source 132 adjacent to each other are illustrated to be separated from each other, but in practice, the first light source 131 and the second light source 132 are arranged to be close to each other. According to this configuration, both light of the first light source 131 and light of the second light source 132 can be accurately emitted in a specific direction.

### (Fourth Modification)

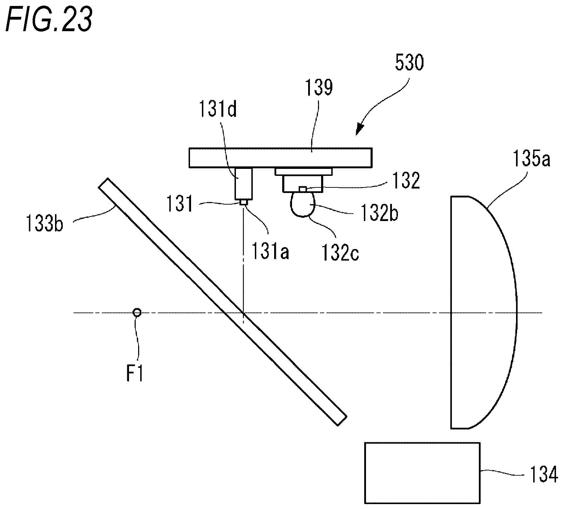

FIG. 23 is a schematic diagram showing an internal structure of a lamp unit 530 according to a fourth modification of the second embodiment of the present invention. Also in the present modification, the first light source 131, the second light source 132, the rotating reflector 133, the optical sensor 134, the lens component 135, and the common substrate 139 are similar to those in the second embodiment described above.

As shown in FIG. 23, in the lamp unit 530, the second light source 132 is provided with a third lens element 132b that converts light emitted from the second light source 132 into parallel light and causes the parallel light to be emitted. The first light source 131 is provided with a position adjustment member 131d for adjusting a position of the first light source 131 in a height direction. The light-emitting unit 131a of the first light source 131 is provided at a position closer to a virtual rear focal point of the first lens element 135a than a light-emitting unit 132c of the third lens element 132b. The virtual rear focal point is located on a virtual optical axis of the first lens element 135a that extends while being reflected by the blades 133b of the scanning unit (rotating reflector 133). According to this configuration, since light emitted from the second light source 132 becomes coherent light with sufficient accuracy by the third lens element 132b, although a position of the light-emitting unit 132c of the third lens element 132b is slightly away from the virtual rear focal point, the light is diffused to a front side of the lamp and is difficult to be emitted. In contrast, since the light-emitting unit 131a of the first light source 131 is provided at a position close to the virtual rear focal point of the first lens element 135a, the light emitted from the first light source 131 is diffused to the front side of the lamp and is difficult to be emitted, and is easily emitted to a target place.

### (Fifth Modification)

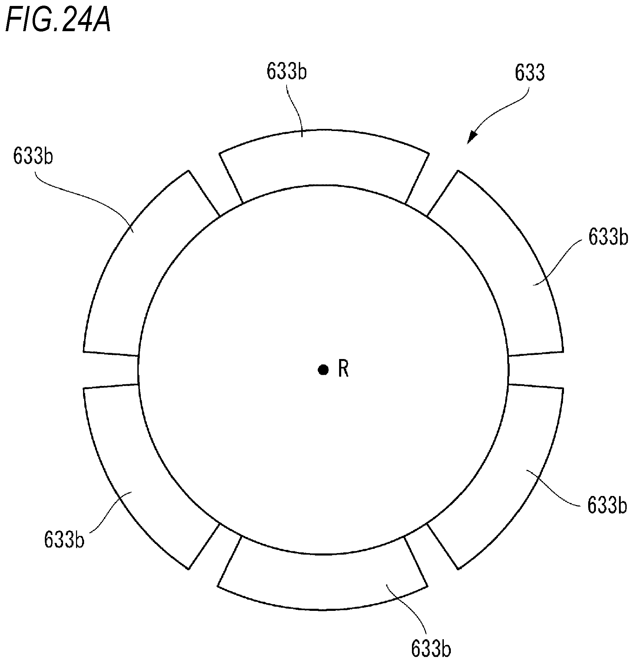

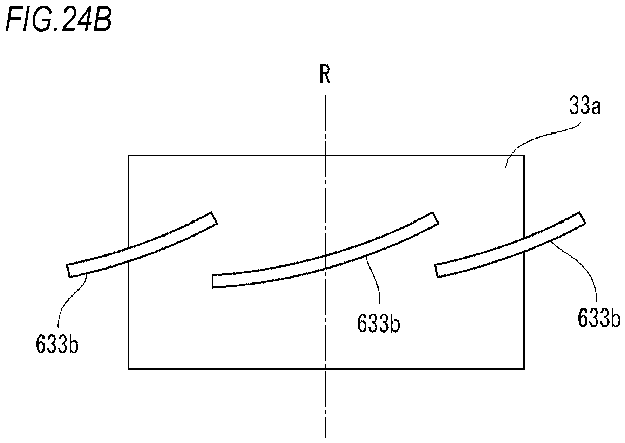

FIGS. 24A and 24B show a rotating reflector 633 provided inside a lamp unit according to a fifth modification. FIG. 24A is a front view of the rotating reflector 633, and FIG. 24B is a side view of the rotating reflector 633.

As shown in FIGS. 24A and 24B, the scanning unit (rotating reflector 633) includes a plurality of (six in this example) reflective surfaces (blades 633b). The blade 633b has a twisted shape in which an angle with respect to the rotation axis R gradually changes in a circumferential direction. Further, the six blades 633b are slightly different from each other in an entire angle with respect to the rotation axis R. Light emitted from the second light source 132 and reflected by the blades 633b irradiates linear regions different from one another. According to this configuration, it is possible to grasp in advance in which direction the light reflected by which blade 633b is emitted, and it is easy to estimate a position of another vehicle (a preceding vehicle, an oncoming vehicle, or the like). For example, when the other vehicle is detected by the blade 633b that irradiates the linear region on a lower side, a position of the other vehicle is close. When the other vehicle is detected by the blade 633b that irradiates the linear region in a central portion, the position of the other vehicle is slightly close, and when the other vehicle is detected by the blade 633b that irradiates the linear region on an upper side, the position of the other vehicle is far.

The first light source may be configured to emit infrared rays suitable for image-capturing by an infrared ray camera mounted on a vehicle. The second light source may be a light source that emits visible light. In this case, a sensor that outputs a signal corresponding to a reflection intensity of the visible light emitted by the second light source may be used as the optical sensor.

The present invention is not limited to the above embodiments and may be modified or improved as appropriate.

Materials, shapes, dimensions, numerical values, forms, numbers, arrangement places, and the like of components in the above embodiments are optional and not limited as long as the present invention can be achieved.

The present application is based on Japanese Patent Application (No. 2019-165512) filed on September 11, 2019 and Japanese Patent Application (No. 2019-165513) filed on September 11, 2019, contents of which are incorporated herein as reference.

### INDUSTRIAL APPLICABILITY

According to the present invention, there is provided a vehicle lamp system in which detection accuracy of an in-vehicle camera and a lamp-mounted optical sensor is further improved.

## Claims

1. A vehicle lamp system that comprises a vehicle lamp and a control unit and that is mounted on a vehicle comprising an in-vehicle camera,
wherein the vehicle lamp comprises
a first light source configured to emit visible light for capturing an image by an in-vehicle camera,
a second light source,
a scanning unit configured to scan light emitted from the first light source and light emitted from the second light source toward a front side of the lamp and to cause the front side of the lamp to be irradiated with the lights, and
an optical sensor having high sensitivity to a wavelength of the light emitted by the second light source,
wherein the control unit comprises
a region setting unit configured to set at least one of a dimming region and an emphasis region by comparing information estimated from an image output by the in-vehicle camera with information estimated from an output of the optical sensor, and
a lamp control unit configured to control a turned-on state of at least one of the first light source and the second light source based on an output of the region setting unit.

2. The vehicle lamp system according to claim 1,
wherein the region setting unit sets the dimming region or the emphasis region based on a first other-vehicle position that is position information of another vehicle estimated from the image output by the in-vehicle camera and a second other-vehicle position that is position information of the another vehicle estimated from the output of the optical sensor,
wherein the lamp control unit controls the first light source such that the dimming region is irradiated with light emitted from the first light source at an illuminance lower than those of other regions, and
wherein the lamp control unit controls the second light source such that the emphasis region is irradiated with light emitted from the second light source at an illuminance higher than those of other regions.

3. The vehicle lamp system according to claim 1,
wherein the first light source emits visible light, and
wherein the second light source emits an infrared ray, and the optical sensor is an infrared ray sensor.

4. The vehicle lamp system according to claim 1,
wherein the first light source emits visible light,
wherein the second light source emits an infrared ray, and the optical sensor is an infrared ray sensor,
wherein the region setting unit sets the dimming region at a position of another vehicle estimated from an output of at least one of the in-vehicle camera and the optical sensor, and
wherein the lamp control unit controls the first light source such that the dimming region is irradiated with light emitted from the first light source at an illuminance lower than those of other regions.

5. The vehicle lamp system according to claim 1,
wherein the region setting unit sets the dimming region based on a second other-vehicle position when both a first other-vehicle position that is position information of another vehicle estimated from an image output by the in-vehicle camera and the second other-vehicle position that is position information of the another vehicle estimated from an output of the optical sensor are acquired, and
wherein the lamp control unit controls the first light source such that the dimming region is irradiated with light emitted from the first light source at an illuminance lower than those of other regions.

6. The vehicle lamp system according to claim 1,
wherein the region setting unit sets, as the emphasis region, a region that is within a first other-vehicle position and where another vehicle is not estimated from an output of the optical sensor when the another vehicle is not estimated from an output of the optical sensor with respect to the first other-vehicle position although the first other-vehicle position that is position information of the another vehicle estimated from an image output by the in-vehicle camera is acquired, and
wherein the lamp control unit controls the second light source such that the emphasis region is irradiated with light emitted from the second light source at an illuminance higher than those of other regions.

7. The vehicle lamp system according to claim 1,
wherein the region setting unit sets, as the emphasis region, a region that is within a second other-vehicle position and where another vehicle is not estimated from an image of the in-vehicle camera when the another vehicle is not estimated from an image of the in-vehicle camera with respect to the second other-vehicle position although the second other-vehicle position that is position information of the another vehicle estimated from an output of the optical sensor is acquired, and
wherein the lamp control unit controls the first light source such that the emphasis region is irradiated with light emitted from the first light source at an illuminance higher than those of other regions.

8. The vehicle lamp system according to claim 1,
wherein the first light source, the second light source, the scanning unit, and the optical sensor are provided in a common lamp chamber formed by a housing and an outer cover.

9. The vehicle lamp system according to claim 1,
wherein the optical sensor is a photodiode that outputs a signal corresponding to an intensity of reflected light of light emitted from the second light source, and
wherein the region setting unit estimates that another vehicle is located in a region where a signal output from the photodiode exceeds a predetermined value, and sets a second other-vehicle position that is position information of the another vehicle.

10. A vehicle lamp comprising:
a first light source configured to emit light for a driver or an in-vehicle camera to perform visual recognition;
a second light source configured to emit light having a wavelength different from that of the first light source;
a scanning unit configured to scan light emitted from the first light source and light emitted from the second light source and emit the lights toward a front side of the lamp;
an optical sensor configured to output a signal corresponding to a reflection intensity of light emitted from the second light source; and
a control unit configured to control a turned-on state of the first light source based on an output of the optical sensor so as not to give glare to an oncoming vehicle,
wherein the scanning unit scans light emitted from the second light source such that the light emitted from the second light source irradiates a linear region that extends in a horizontal direction, and
wherein the scanning unit comprises a reflector in which a portion that reflects light of the first light source toward a front side of the lamp and a portion that reflects light of the second light source toward the front side of the lamp are the same, or a reflector in which a portion that reflects the light of the first light source toward the front side of the lamp and a portion that reflects the light of the second light source toward the front side of the lamp are integrated.

11. The vehicle lamp according to claim 10,
wherein a first lens element that causes light emitted from the first light source and light emitted from the second light source to be emitted, which are reflected by the scanning unit, to the front side of the lamp, and a second lens element that guides reflected light of the light emitted from the second light source to the optical sensor are integrally formed as a single lens component,
wherein the scanning unit is located near a focal point of the first lens element, and
wherein the optical sensor is located near a focal point of the second lens element.

12. The vehicle lamp according to claim 11,
wherein a rear focal point distance of the first lens element is shorter than a rear focal point distance of the second lens element.

13. The vehicle lamp according to claim 11,
wherein a light-shielding wall is provided between an optical axis of the first lens element and an optical axis of the second lens element at a position where the light-shielding wall shields light that is emitted from the first light source and is incident on the optical sensor without being incident on the first lens element and light that is emitted from the second light source and is incident on the optical sensor without being incident on the first lens element.

14. The vehicle lamp according to claim 11,
wherein a filter element configured to reduce a peak wavelength of light emitted from the first light source is provided between the optical sensor and the second lens element.

15. The vehicle lamp according to claim 11,
wherein the first light source and the second light source are provided on a common substrate.

16. The vehicle lamp according to claim 15,
wherein the number of the first light sources is larger than the number of the second light sources.

17. The vehicle lamp according to claim 15,
wherein the optical sensor is also provided on the common substrate.

18. The vehicle lamp according to claim 15,
wherein a height of a light-emitting unit of the first light source from the common substrate is different from a height of a light-emitting unit of the second light source from the common substrate, and
wherein the light-emitting unit of the second light source is provided at a position closer to a virtual rear focal point of the first lens element located on a virtual optical axis of the first lens element that extends while being reflected by the scanning unit than the light-emitting unit of the first light source.

19. The vehicle lamp according to claim 15,
wherein the first light source is provided with a primary optical component, and light emitted from the first light source is emitted via the primary optical component, and
wherein a light-emitting portion of the primary optical component and a light-emitting unit of the second light source are located on a virtual optical axis of the first lens element that extends while being reflected by the scanning unit.

20. The vehicle lamp according to claim 15,
wherein the second light source is provided with a third lens element that converts light emitted from the second light source into parallel light and causes the parallel light to be emitted, and
wherein a light-emitting unit of the first light source is provided at a position closer to a virtual rear focal point of the first lens element located on a virtual optical axis of the first lens element that extends while being reflected by the scanning unit than a light-emitting unit of the third lens element.

21. The vehicle lamp according to claim 10,
wherein the linear region has an upper-lower width of 0.4 degrees or more in a vertical direction, and
wherein the linear region overlaps with a horizontal line viewed from a mounting height of the vehicle lamp on a vehicle.

22. The vehicle lamp according to claim 10,
wherein an illuminance at which light of the second light source irradiates a virtual vertical screen provided at a predetermined position in front of the lamp is larger than an illuminance at which light of the first light source irradiates the virtual vertical screen.
